# EUROPEAN PATENT APPLICATION

(11) **EP 1 615 121 A1**
(43) Date of publication of application: **11.01.2006**
(21) Application number: 04727405.5
(22) Date of filing: 14.04.2004
(51) Int. Cl.: G06F 7/24, G06F 12/16, G06F 15/80, G06F 17/30

(54) **INFORMATION PROCESSING SYSTEM AND INFORMATION PROCESSING METHOD**

(30) Priority: 16.04.2003 JP 2003111978
(71) Applicant: Furusho, Shinji, Yokohama-shi, Kanagawa 221-0005 (JP)
(72) Inventor: Furusho, Shinji, Yokohama-shi, Kanagawa 221-0005 (JP)
(74) Representative: Zimmermann, Gerd Heinrich
(86) International application number: PCT/JP2004/005323
(87) International publication number: WO 2004/092948

(57) **Abstract**

In the distributed memory, elements in a sequence stored in various memories are input/output by a single instruction and processing and communication are unified. Between adjacent PMM 12, there are first packet transmission path 14 for transmitting a packet from a first to second PMM and a second packet transmission path 16 for transmitting a packet from a second to a first PMM. Each PMM has an information block consisting of a value list and a pointer sequence. The value list contains item values in the sequence of item value numbers corresponding to the item values belonging to particular items for expressing table-type data expressed as a sequence of records, each containing an item and an item value belonging to the item. The pointer sequence contains a pointer value for instructing the item number in the unique sequence set arrangement order. The information blocks held by the respective memories constitute a global information block.

## Description

### Technical Field to Which the Invention Belongs

The present invention relates to an information processing system adopting architecture of a parallel computer capable of realizing SIMD (Single Instruction Stream, Multiple Data Stream).

### Background Art

In these days when computers are introduced to various places of the whole society, and networks including the Internet have become widespread, massive data are stored everywhere. In order to process such massive data, an enormous amount of calculation is required, and for that purpose, it is natural to attempt to introduce a parallel processing.

The parallel processing architecture is roughly divided into "shared memory type" and "distributed memory type". The former ("shared memory type") is a system in which plural processors share one huge memory space. In this system, since traffic between a processor group and the shared memory becomes a bottle neck, it is not easy to construct a realistic system using more than one hundred processors. Accordingly, for example, when the square roots of one billion floating-point variables are calculated, an acceleration ratio to a single CPU is at most 100 times. Empirically, the upper limit is approximately 30 times.

In the latter ("distributed memory type"), each of processors has a local memory, and these are integrated to construct a system. In this system, it is possible to design a hardware system including several hundred to several tens of thousands of processors. Accordingly, the acceleration ratio to a single CPU at the time when the square roots of one billion floating-point variables are calculated can be made several hundred to several tens of thousands of times. However, also in the latter, there are some problems described later. [First problem: assignment management of huge array]

A first problem of the "distributed memory type" is a problem of assignment management of data.

Huge data (since it is generally an array, the term of the array will be used hereinafter in a description) can not be contained in a local memory owned by one processor, and is inevitably assigned to and managed by plural local memories. It is apparent that unless an effective and flexible assignment management mechanism is introduced, various troubles are caused in the development and execution of a program.

### [Second problem: low efficiency of inter-processor communication ]

When each processor of the distributed memory type system attempts to access the huge array, although it can quickly access an array element on its own local memory, an access to an array element owned by another processor inevitably requires inter-processor communication. As compared with communication with the local memory, the performance of the inter-processor communication is extremely low, and it is said that 100 clocks are required at the minimum. Thus, at the time when sort is executed, reference is made over the whole area of the huge array, and the inter-processor communication occurs frequently, and therefore, the performance is extremely lowered.

This problem will be described in more specifically. As of 1999 , a personal computer uses one to several CPUs and is constructed as the "shared memory type". A standard CPU used in this personal computer operates at an internal clock approximately 5 to 6 times faster than a memory bus, its inside is provided with an automatic parallel execution function and a pipeline processing function, and a piece of data can be processed at one clock (memory bus).

Thus, in the "distributed memory type" multi-processor system, although the number of processors is large, it may become 100 times slower than the single processor (shared memory type).

### [Third problem: supply of program]

A third problem of the "distributed memory type" is a problem of how to supply programs to many processors.

In a system (MIMD: Multiple Instruction Stream, Multiple Data Stream) in which different programs are loaded to a very large number of processors, and the whole is operated in cooperation, a large load is required for creation of programs, compilation, and distribution.

On the other hand, in a system (SIMD: Single Instruction Stream, Multiple Data Stream) in which many processors are operated by the same program, the degree of freedom of the program is decreased, and a situation is also imagined in which a program to produce a desired result can not be developed.

The invention provides a method and computer architecture to solve the first to third problems of the "distributed memory type".

Incidentally, in order to store tabular data, the present inventor devises a structure and a processing method in which an information block for each item is formed, a value list storing item values and a pointer array storing values (pointer values) to specify the value list for respective records are provided in the information block, and the pointer array and the value list are sequentially specified from a record number, so that a tabular view can be acquired (see International Publication WO00/10103, especially Fig. 3 and Fig. 4). In this structure, as the number of records increases, the value list and the pointer array, especially the pointer array becomes very large, and accordingly, it is desirable that this is assigned to plural memories, and the processing such as retrieval, tabulation and sort can be executed by a single instruction.

Then, the invention has an object to provide a computer architecture capable of realizing a very high speed parallel processing by inputting/outputting, in a distributed memory type, elements in arrays stored in various memories by a single instruction and by integrating the processing and communication.

### Disclosure of the Invention

The object of the invention is achieved by an information processing system including
plural information processing units each holding a local information block to express tabular data expressed as an array of records including an item and item values belonging to the item, and
a packet transmission path to connect the plural information processing units,
wherein the local information block includes a value list in which the item values are stored in order of item value numbers corresponding to item values belonging to a specific item, and a pointer array in which pointer values to indicate the item value numbers are stored in order of numbers to indicate a unique local order corresponding to the records, and
the information processing unit is characterized in that each of the information processing units includes
means for creating, based on the numbers to indicate the local order in the local information block, numbers to indicate a unique global order in all the plural information processing units,
means for transmitting the value list to another information processing unit through the packet transmission path,
means for receiving a value list from the another information processing unit through the packet transmission path, and
means for giving, by referring to an item value in the value list from the another information processing unit, a global order in all the plural information processing units to the item value in the value list in the local information block (claim 1).

According to this invention, packets are transmitted to the packet transmission path in parallel, and in each PPM, the order of the item value of its own grasped local value list can be determined in view of the order of the value list of the another PMM. Accordingly, in each PPM, it becomes possible to suitably grasp a position or an order of its own grasped subset as global tabular data. By grasping the position or the order as stated above, the after-mentioned processing of retrieval, cross tabulation, and sort can be smoothly realized.

Besides, the object of the invention is achieved by an information processing system including plural memory modules each having a memory, an interface, and a control device, and a packet transmission path connecting interfaces of the adjacent memory modules,
wherein a memory of each of the memory modules holds an information block including a value list which is for expressing tabular data expressed as an array of records each including an item and an item value belonging to the item and in which item values are stored in order of item value numbers corresponding to the item values belonging to a specific item, and a pointer array in which pointer values to indicate the item value numbers are stored in a unique order of an ordered set array, and a global information block is formed of an aggregate of the information blocks held in the respective memories, and
the information processing system is characterized in that
the control device of each of the memory modules includes offset value storage means for holding an offset value to indicate that its own grasped information block, as a subset of the global information block, occupies which position in the pointer array,
global ordered set array creation means for creating, based on the offset value, a global ordered set array in the global information block,
packet transmission means for packeting its own value list of an item and transmitting it by using the transmission path between the adjacent memory modules,
packet reception means for receiving a packeted value list of another memory module by using the transmission path in parallel to packet transmission by the packet transmission means, and
order judgment means for determining an order, in the global information block, of the item value in its own value list of the item by referring to the received respective value list and for storing the order, in the global information block, of the item value into a global value number array relating to the item (claim 2).

In a preferred embodiment, the order judgment means is constructed to calculate the order in the global information block by adding a total sum of differences between the judged respective relative orders and the original order to the original order (claim 3).

In a more preferred embodiment, the order judgment means compares the transmitted packet and the received packet and deletes a duplicate value (claim 4).

In another preferred embodiment, the control device of each of the memory modules includes
flag array setup means for creating, with respect to an item to be retrieved, a flag array with a same size as the value list of the item and giving a specific value to an inside of the flag array corresponding to an item value coincident with a retrieval condition,
retrieval condition judgment means for judging whether a record corresponding to a value in the ordered set array is coincident with the retrieval condition by specifying, with respect to the item to be retrieved, a value in the pointer array corresponding to a position indicated by the ordered set array and then by specifying a value in the flag array corresponding to a position indicated by the value in the pointer array, and
local retrieval means for storing a value of an ordered set coincident with the retrieval condition and a value of a corresponding global ordered set into a second ordered set array and a second global ordered set array,
wherein the packet transmission means uses the transmission path, packets the second global ordered set array and transmits it, the packet reception means uses the transmission path and receives a packeted second global ordered set array of another memory module,
there is further included second order judgment means for determining an order, in the global information block, of a value in its own global ordered set array by referring to the received respective second global ordered set array and for storing the order in the global information block into a third global ordered set array, and
an order of a record coincident with the retrieval condition is decided by a value of the third global ordered set array (claim 5).

Besides, in another preferred embodiment, the control device of each of the memory modules include
count-up means for creating, with respect to items to be tabulated, a logical coordinate array with a size obtained by multiplying sizes of value lists of the items and for acquiring the number of records for each set of item values of each item by counting up values of the logical coordinate array indicated by values in the ordered set array and corresponding to the sets of the values in the pointer arrays of the items to be tabulated,
wherein the packet transmission means uses the transmission path, and packets and transmits the logical coordinate array in which count-up has been performed by the count-up means, the number of records for each set of the item values of each global item is stored into the logical coordinate array by sequentially executing, in each of the memory modules, the count-up of the same logical coordinate array and the transmission using the transmission path, and
in each of the memory modules, the packet reception means and the packet transmission means sequentially execute reception and storage of the logical coordinate array in which the count-up has been ended, and the transmission using the transmission path (claim 6).

In more preferred embodiment, the count-up means creates, with respect to items to be tabulated, a multi-dimensional count-up array with a size obtained by multiplying sizes of value lists of the items, acquires the number of records for each set of item values of each item by counting up values in the count-up array indicated by values in the ordered set array and corresponding to the set of values in the pointer arrays of the items to be tabulated, and arranges, in the logical coordinate array in which mapping to position in the count-up array is made, a value in the count-up array in accordance with the mapping (claim 7).

Besides, in another preferred embodiment, the control device of each of the memory modules includes
existence number array creation means for creating, with respect to an item to be sorted, an existence number array with a same size as a value list of the item, and for arranging the number of values, to specify respective item values in the value list, of the ordered set array,
accumulated number array creation means for accumulating values in the existence number array, calculating an accumulated number to indicate a head position of a record having a corresponding item value at a time when the sort is performed in the memory module, and arranging the accumulated number in an accumulated number array, and
local sort means for creating a second global value number array, a fourth global ordered set array and a third ordered set array, arranging a global value number corresponding to the item value at a position indicated by the accumulated number in the second global value number array based on the accumulated number in the accumulated number array corresponding to item value indicated by a value of the ordered set array, and arranging a value of the ordered set array and a value of the corresponding global ordered set array at a position indicated by the accumulated number in the third ordered set array and the fourth global ordered set array,
wherein the packet transmission means uses the transmission path, and packets and transmits at least the second global value number array, and the packet reception means uses the transmission path in parallel and receives a packeted second global value array of another memory module,
there is further included third order judgment means for storing an order, in the global information block, of a value in its own second global value number array into the fifth global ordered set array, and
an order of the sorted record is decided by the value of the fifth global ordered set array (claim 8).

In a more preferred embodiment, the packet transmission means packets and transmits the second global value number array and the fourth global ordered set array by pairing a value of the second global value number array and a value of the fourth global ordered set array, the packet reception means receives the packeted second global value number array and fourth global ordered set array of another memory module, and
the third order judgment means judges an order by comparing, when a value of its own second global value number array and a value of the second global number array of the another memory module are equal, values of the fourth global ordered set arrays forming a pair of the respective values (claim 9).
In still another preferred embodiment, the control device of the memory module includes a resister group for use as the array, and an operation using the array is executed without accessing a memory (claim 10).

The respective means in the foregoing structure, for example, the ordered set array creation means, the order judgment means, the flag array setup means, the check condition judgment means, the local retrieval means and the like are realized by the control device in the memory module.

Besides, in an information processing system including plural information processing units each holding a local information block to express tabular data expressed as an array of records including an item and item values belonging to the item, and a packet transmission path to connect the plural information processing units,
wherein the local information block includes a value list in which the item values are stored in order of item value numbers corresponding to item values belonging to a specific item, and a pointer array in which pointer values to indicate the item value numbers are stored in order of numbers to indicate a unique local order corresponding to the records,
the object of the invention is achieved by an information processing method characterized by including
a step at which each of the information processing units creates, based on the numbers to indicate the local order in the local information block, numbers to indicate a unique global order in all the plural information processing units,
a step at which each of the information processing units transmits the value list to another information processing unit through the packet transmission path,
a step at which each of the information processing units receives a value list from the another information processing unit through the packet transmission path, and
a step at which each of the information processing units gives, by referring to an item value in the value list from the another information processing unit, a global order in all the plural information processing units to the item value in the value list in the local information block (claim 11).

Besides, in an information processing system including plural memory modules each having a memory, an interface, and a control device, and a packet transmission path connecting interfaces of the adjacent memory modules,
wherein a memory of each of the memory modules holds an information block including a value list which is for expressing tabular data expressed as an array of records each including an item and an item value belonging to the item and in which item values are stored in order of item value numbers corresponding to the item values belonging to a specific item, and a pointer array in which pointer values to indicate the item value numbers are stored in a unique order of an ordered set array, and a global information block is formed of an aggregate of the information blocks held in the respective memories,
the object of the invention is achieved by an information processing method characterized by including
an offset value storage step of holding an offset value to indicate that its own grasped information block occupies which position as a subset of the global information block in the pointer array,
a global ordered set array creation step of creating a global ordered set array in the global information block based on the offset value,
a packet transmission step of packeting its own value list of an item and transmitting it by using the transmission path between the adjacent memory modules,
a packet reception step of receiving a packeted value list of another memory module by using the transmission path in parallel to packet transmission by the packet transmission means, and
an order judgment step of referring to the received respective value list and storing an order, in the global information block of the item value, of the item value in its own value list of the item into a global value number array relating to the item (claim 12).

In a preferred embodiment, the order judgment step includes a step of calculating the order in the global information block by adding a total sum of differences between the judged respective relative orders and the original order to the original order (claim 12).

In a preferred embodiment, the order judgment step includes a step of calculating the order in the global information block by adding a total sum of differences between the judged respective relative orders and the original order to the original order (claim 13).

In a more preferred embodiment, at the order judgment step, the transmitted packet is compared with the received packet and a duplicate value is deleted (claim 14).

Besides, in another preferred embodiment, in each of the memory modules, there are included
a flag array setup step of creating a flag array with a same size as the value list of the item and giving a specific value to an inside of the flag array corresponding to an item value coincident with a retrieval condition,
a retrieval condition judgment step of judging whether a record corresponding to a value in the ordered set array is coincident with the retrieval condition by specifying, with respect to an item to be retrieved, a value in the pointer array corresponding to a position indicated by the ordered set array and then by specifying a value in the flag array corresponding to a position indicated by the value in the pointer array,
a local retrieval step of storing a value of an ordered set coincident with the retrieval condition and a value of a corresponding global ordered set into a second ordered set array and a second global ordered set array,
a second packet transmission step of packeting the second global ordered set array and transmitting it by using the transmission path,
a second packet reception step of receiving a packeted second global ordered set array of another memory module by using the transmission path in parallel to the packet transmission, and
a second order judgment step of determining an order, in the global information block, of a value in its own global ordered set array by referring to the received respective second global ordered set array and storing the order in the global information block into a third global ordered set array,
wherein an order of a record coincident with the retrieval condition is decided by a value of the third global ordered set array (claim 15).

Besides, in another preferred embodiment, in each of the memory modules, there are included
a count-up step of creating, with respect to items to be tabulated, a logical coordinate array with a size obtained by multiplying sizes of value lists of the items, and acquiring the number of records for each set of item values of each item by counting up values of the logical coordinate array indicated by values in the ordered set array and corresponding to sets of values in the pointer arrays of the items to be tabulated, and
a third packet transmission step of packeting and transmitting, by using the transmission path, the logical coordinate array in which the count-up has been performed,
wherein the number of records for each set of item values of each global item is stored in the logical coordinate array by sequentially executing, in each of the memory modules, the count-up step to the same logical coordinate array and the transmission step using the one transmission path, and
there are further included
a third packet reception step of, in each of the memory modules, receiving and storing the logical coordinate array in which the count-up is ended, and
a fourth packet transmission step of transmitting the received logical coordinate array by using the transmission path (claim 16).

In more preferred embodiment, in the count-up step, with respect to items to be tabulated, a multi-dimensional count-up array with a size obtained by multiplying sizes of value lists of the items is created, the number of records for each set of item values of each item is acquired by counting up values in the count-up array indicated by values in the ordered set array and corresponding to the set of values in the pointer arrays of the items to be tabulated, and in the logical coordinate array in which mapping to position in the count-up array is made, a value in the count-up array is arranged in accordance with the mapping (claim 17).

Besides, in another preferred embodiment, in each of the memory modules, there are included
an existence number array creation step of creating, with respect to an item to be sorted, an existence number array with a same size as a value list of the item, and for arranging the number of values, to specify respective item values in the value list, of the ordered set array,
an accumulated number array creation step of accumulating values in the existence number array, calculating an accumulated number to indicate a head position of a record having a corresponding item value at a time when the sort is performed in the memory module, and arranging the accumulated number in an accumulated number array, and
a local sort step of creating a second global value number array, a fourth global ordered set array and a third ordered set array, arranging a global value number corresponding to the item value at a position indicated by the accumulated number in the second global value number array based on the accumulated number in the accumulated number array corresponding to an item value indicated by a value of the ordered set array, and arranging a value of the ordered set array and a value of the corresponding global ordered set array at a position indicated by the accumulated number in the third ordered set array and the fourth global ordered set array,
a fifth packet transmission step of packeting and transmitting at least the second global value number array by using the transmission path,
a fourth packet reception step of receiving a packeted second global value array of another memory module by using the transmission path in parallel to packet transmission,
a third order judgment step of storing an order, in the global information block, of a value in its own second global value number array into the fifth global ordered set array, and
wherein an order of the sorted record is decided by the value of the fifth global ordered set array (claim 18).

In a more preferred embodiment, at the fifth packet transmission step, a value of the second global value number array and a value of the fourth global ordered set array are paired, and the second global value number array and the fourth global ordered set array are packeted and transmitted,
at the fourth packet reception step, the packeted second global value number array and fourth global ordered set array of another memory module are received, and
at the third order judgment step, an order is judged by comparing, when a value of its own second global value number array and a value of the second global number array of another memory module are equal, values of the fourth global ordered set array forming a pair of the values (claim 19).

Besides, in an information processing system including plural information processing units each holding a local information block to express tabular data expressed as an array of records including an item and item values belonging to the item, and a packet transmission path to connect the plural information processing units,
wherein the local information block includes a value list in which the item values are stored in order of item value numbers corresponding to item values belonging to a specific item, and a pointer array in which pointer values to indicate the item value numbers are stored in order of numbers to indicate a unique local order corresponding to the records,
the object of the invention is achieved by a program to cause each of the information processing units to realize
a function of creating, based on the numbers to indicate the local order in the local information block, numbers to indicate a unique global order in all the plural information processing units,
a function of transmitting the value list to another information processing unit through the packet transmission path,
a function of receiving a value list from the another information processing unit through the packet transmission path, and
a function of giving, by referring to an item value in the value list from the another information processing unit, a global order in all the plural information processing units to the item value in the value list in the local information block (claim 20).

Besides, the object of the invention is achieved by an information processing system including plural information processing units each including a memory and a control device,
wherein the memory of each of the information processing units holds tabular data expressed as an array of records each including an item and an item value belonging to the item, and global tabular data is formed of an aggregate of tabular data held by respective memory modules, and the information processing system is characterized in that
each of the information processing units includes
a global ordered set array containing values indicating orders of the respective records in the global tabular data, and
record extraction means for specifying a value in the global ordered set array in accordance with an instruction to specify an order received by the control device and for extracting the record indicated by the value (claim 21).

According to the invention, the local tabular data is assigned to and held by the information processing unit including a PMM, a personal computer, a server or the like, and the local retrieval and tabulation can be executed by the single information processing unit, and further, the global ordered set array is provided, so that it becomes also possible to realize the retrieval of the global tabular data and the like. Incidentally, a single personal computer or server may correspond to a single information processing unit, or a single personal computer or server may include plural information processing units.

In a preferred embodiment, in order to reflect a sort order in the information processing unit, the information processing unit includes another ordered set array in which values to specify the records are exchanged, and
in the global ordered set array, the value indicating the order is rearranged to indicate a sort order, in the global tabular data, of the record indicated by the value in the another ordered set array (claim 22). The values rearranged in the global ordered set array have an ascending order.

Besides, in another preferred embodiment, the information processing unit rearranges the value indicating the order to indicate the sort order, in the global ordered set array, of the record sorted in the information processing unit (claim 23).

Also in this embodiment, the values rearranged in the global ordered set array have an ascending order. As stated above, the invention can be applied also to a mode in which the value to specify the record is sorted, and this is stored into the another ordered set array, and can be applied also to a mode in which the record itself is rearranged by sort.

In a further preferred embodiment, a memory of each of the information processing units holds
an information block including a value list which is for expressing tabular data expressed as an array of records each including an item and an item value belonging to the item and in which the item values are stored in order of item value numbers corresponding to item values belonging to a specific item, and a pointer array in which pointer values to indicate the item value numbers are stored in a unique order of an ordered set array, and a global information block is formed of an aggregate of the information blocks held in the respective memories (claim 24).

Besides, the object of the invention is achieved by an information processing system including plural information units each including memory and control device,
wherein a memory of each of the memory modules holds
an information block including a value list which is for expressing tabular data expressed as an array of records each including an item and an item value belonging to the item and in which item values are stored in order of item value numbers corresponding to the item values belonging to a specific item, and a pointer array in which pointer values to indicate the item value numbers are stored in a unique order of an ordered set array, and a global information block is formed of an aggregate of the information blocks held in the respective memories, and the information processing system is characterized in that
the information processing unit includes
a global value number array to receive a value indicating an order of an item value in a global information block, and
item value extraction means for specifying a value in the global value number array in accordance with an instruction to specify an order received by the control device and for extracting an item value in the value list indicated by the value (claim 25).

Incidentally, in the present specification, although a numerical value contained in various arrays is called an "element" or a "value", these are merely different from each other in expression, and there is no essential difference. For example, although what is contained in the value list is expressed also as an "item value", it is apparent that this is an "element" in the value list.

### Brief Description of the Drawings

The object of the invention and other objects will be more apparent by referring to embodiments together with attached drawings. Here,
Fig. 1 is a diagram showing the outline of an information processing system according to an embodiment of the invention.
Fig. 2 is a view showing an example of a structure of a PMM according to the embodiment of the invention.
Fig. 3 is a view showing an example of tabular data.
Fig. 4 is a view for explaining the principle of a structure to hold tabular data in the embodiment.
Fig. 5 is a view for explaining arrays assigned to and held by respective PMMs and their values in the embodiment.
Fig. 6 is a view showing an example of tabular data initially assigned to PMM-0 to PMM-4, respectively.
Fig. 7 is a view showing an example of tabular data initially assigned to PMM-0 to PMM-4, respectively.
Fig. 8 is a flowchart roughly showing a compile processing according to the embodiment.
Fig. 9 is a view showing an arrangement of values to a global ordered set array GOrd in the example shown in Figs. 6 and 7.
Fig. 10 is a view showing an example of packet transmission in the compile processing according to the embodiment.
Fig. 11 is a view showing an example of packet transmission in the compile processing according to the embodiment.
Fig. 12 is a view showing an example of packet transmission in the compile processing according to the embodiment.
Fig. 13 is a view showing an example of packet transmission in the compile processing according to the embodiment.
Fig. 14A and Fig. 14B are flowcharts respectively showing processing to be executed in a PMM at the time of packet transmission and reception in the compile processing according to the embodiment.
Fig. 15A and Fig. 15B are flowcharts respectively showing processing to be executed in a PMM at the time of packet reception in the compile processing according to the embodiment.
Fig. 16 is a flowchart roughly showing a portion of retrieval processing according to the embodiment.
Fig. 17 is a view showing an example of a state in which in each PMM, a flag array in which values are set up and a new global ordered set array and ordered set array as areas are created.
Fig. 18 is a view showing an example of a state in which in each PMM, the processing of Fig. 16 is executed, and values are arranged in a new global ordered set array GOrd' and ordered set array OrdSet' locally and in parallel.
Fig. 19 is a view showing a state in which an unnecessary area is deleted in an array.

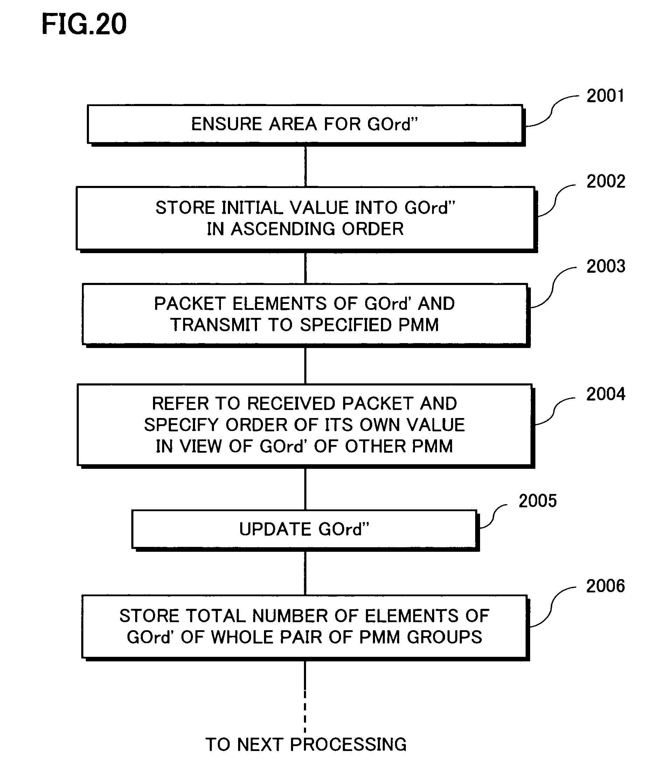

Fig. 20 is a flowchart showing a processing to be executed prior to packet transmission in a retrieval processing according to the embodiment.
Fig. 21 is a view showing an example of the packet transmission in the retrieval processing according to the embodiment.
Fig. 22A and Fig. 22B are flowcharts respectively showing processing to be executed in a PMM at the time of packet transmission and reception in the retrieval processing according to the embodiment.
Fig. 23 is a view showing an example of the packet transmission in the retrieval processing according to the embodiment.
Fig. 24 is a flowchart showing a processing to be executed in a PMM at the time of packet reception in the retrieval processing according to the embodiment.
Fig. 25 is a view showing an example of the packet transmission in the retrieval processing according to the embodiment.
Fig. 26 shows a new array obtained as a result of the retrieval processing according to the embodiment.
Fig. 27 is a flowchart roughly showing a portion of a cross tabulation processing according to the embodiment.
Fig. 28 is a view showing a state in which with respect to items to be cross-tabulated, an area with a size obtained by multiplying sizes of value lists VL of the items is formed in each PMM, and an initial value "0" is given to each.
Fig. 29 is a view showing an example of count-up of each PMM in the cross tabulation processing.
Fig. 30 is a view showing a state using a value of a global value number array GVNo to specify a value of a global area in each PMM.
Fig. 31A and Fig. 31B are flowcharts respectively showing processing to be executed in a PMM at the time of packet transmission and reception in the cross tabulation processing according to the embodiment.
Fig. 32 is a view showing an example of packet transmission in the cross tabulation processing according to the embodiment.
Fig. 33 is a view showing an example of the packet transmission in the cross tabulation processing according to the embodiment.
Fig. 34 is a view showing an example of the packet transmission in the cross tabulation processing according to the embodiment.
Fig. 35 is a view showing an example of the packet transmission in the cross tabulation processing according to the embodiment.
Fig. 36 is a view showing an example of the packet transmission in the cross tabulation processing according to the embodiment.
Fig. 37 is a view showing an example of the packet transmission in the cross tabulation processing according to the embodiment.

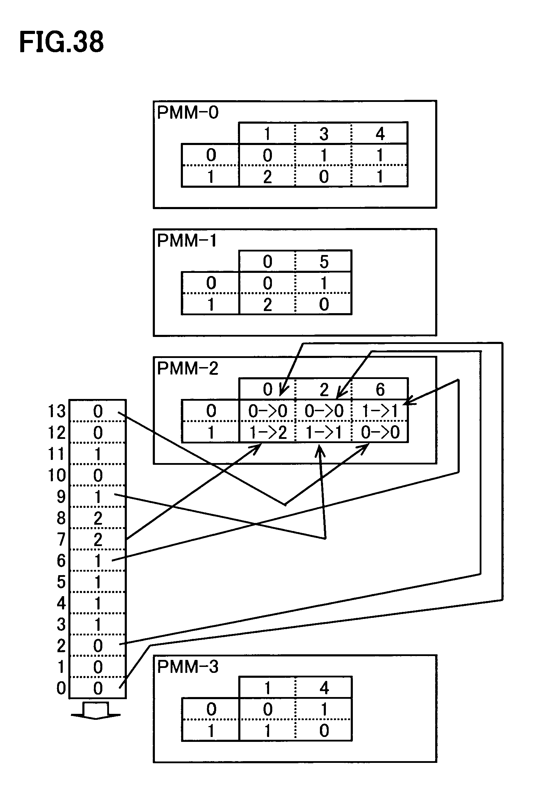

Fig. 38 is a view showing an example of the packet transmission in the cross tabulation processing according to the embodiment.

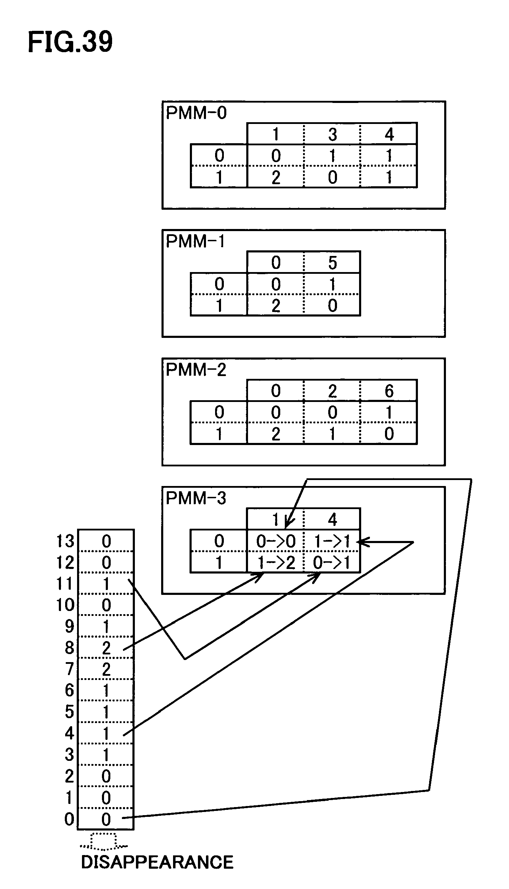

Fig. 39 is a view showing an example of the packet transmission in the cross tabulation processing according to the embodiment.
Fig. 40 is a view showing tabulation results by the cross tabulation processing according to the embodiment.
Fig. 41 is a flowchart roughly showing a portion of sort processing according to the embodiment.
Fig. 42 is a view showing a state in which with respect to an item to be sorted, an area with the same size as a value list VL of the item is formed in each PMM, and an initial value "0" is given to each.
Fig. 43 is a view showing an example of count-up in each PMM.
Fig. 44 is a flowchart roughly showing a portion (creation of an accumulated number array) of the sort processing according to the embodiment.
Fig. 45 is a view showing an example of an accumulated number array according to the embodiment.
Fig. 46 is a flowchart showing a local sort processing executed in each PMM according to the embodiment.
Fig. 47 is a view showing an example of a state in which the local sort processing is executed in each PMM.
Fig. 48 is a view showing an example of a state in which the local sort processing is executed in each PMM.
Fig. 49 is a flowchart showing a processing to be executed in a PMM at the time of packet transmission in the sort processing according to the embodiment.
Fig. 50 is a view showing a state in which an array GOrd' ' with initial values arranged is formed in each PMM in the embodiment.
Fig. 51 is a view showing an example of packet transmission in the sort processing according to the embodiment.
Fig. 52A and Fig. 52B are flowcharts respectively showing processing to be executed in a PMM at the time of packet transmission and packet reception in the sort processing according to the embodiment.
Fig. 53 is a view showing an example of packet transmission in the sort processing according to the embodiment.
Fig. 54 is a view showing an example of the packet transmission in the sort processing according to the embodiment.
Fig. 55 is a flowchart showing a processing to be executed in a PMM at the time of packet reception in the sort processing according to the embodiment.
Fig. 56 is a view showing sort results by the sort processing according to the embodiment.
Fig. 57 is a view showing an example of tabular data sorted by an item "age" obtained by the sort processing according to the embodiment.
Fig. 58A and Fig. 58B are views showing an example in which the sort of tabular data is expressed by the rearrangement of address information.
Fig. 59 is a view showing an example in which the tabular data shown in Figs. 58A and 58B is assigned to and held by respective PMMs without a global ordered set array.
Fig. 60 is a view showing an example in which the tabular data shown in Figs. 58A and 58B is assigned to and held by the respective PMMs using a global ordered set array.
Fig. 61 is a view showing a state in which tabulation results are acquired in the respective PMMs.

### Description of Preferred Embodiments of the Invention

### [Hardware structure]

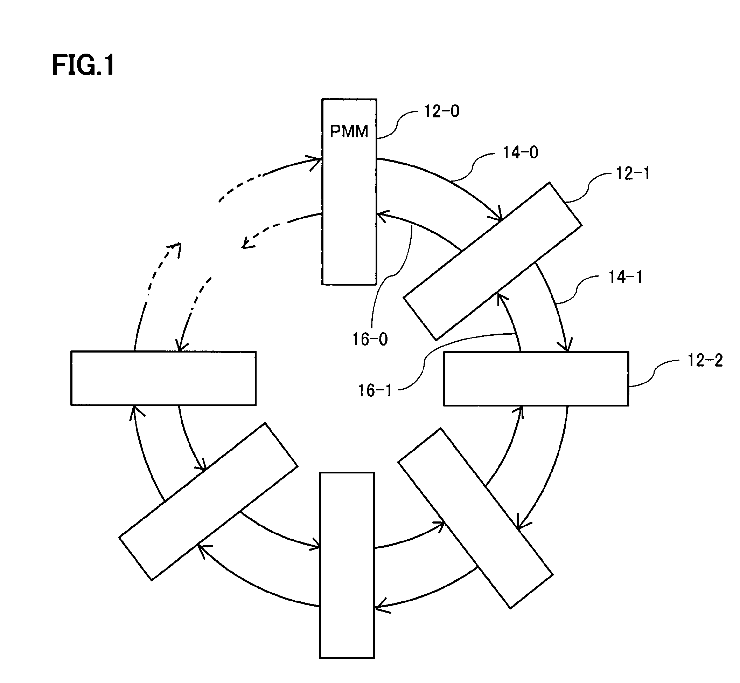

Hereinafter, embodiments of the invention will be described with reference to the attached drawings. Fig. 1 is a block diagram showing the outline of an information processing system according to an embodiment of the invention. As shown in Fig. 1, in this embodiment, plural memory modules with processors (hereinafter respectively referred to as "PMM") 12-0, 12-1, 12-2, ··· are arranged in a ring shape, and the adjacent memory modules are connected by a first bus (see, for example, reference characters 14-0, 14-1) to transmit data clockwise, and a second bus (see, for example, reference characters 16-0, 16-1) to transmit data counterclockwise. In the first bus and the second bus, packet communication between the PMMs is executed. In this embodiment, the transmission paths (packet transmission paths) in which the packet communication is executed are called the first bus and the second bus.

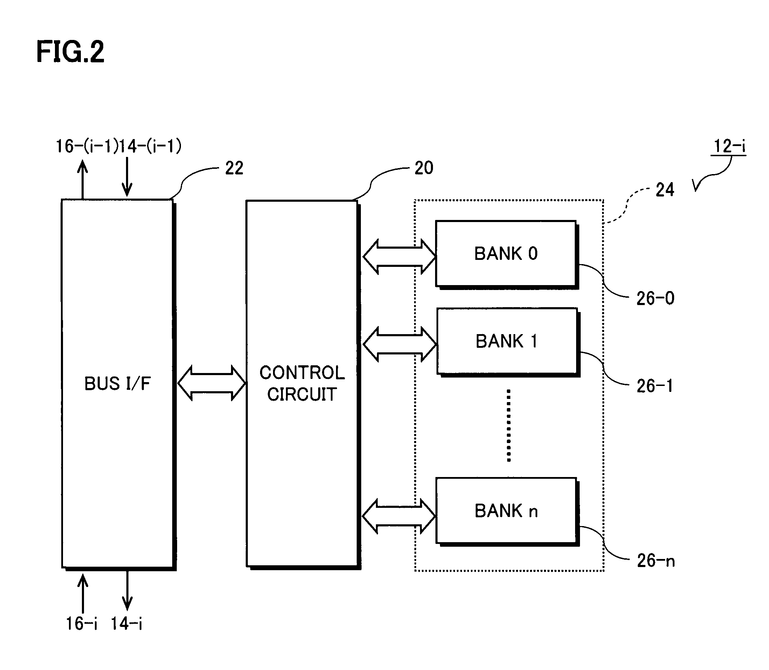

Fig. 2 is a view showing an example of a structure of a PMM 12. As shown in Fig. 2, the PMM 12 includes a control circuit 20 to control access to a memory, execution of an operation and the like in accordance with instructions, a bus interface (I/F) 22 and a memory 24.

The memory 24 includes plural banks BANKO, 1, · · ·, n (reference character 26-0, · · ·, n), and an after-mentioned specified array can be stored in each of them.

Besides, the control circuit 20 can perform data transmission/reception to/from another external computer or the like. Besides, another computer may access a desired bank of the memory by bus arbitration.

### [Storage structure of data]

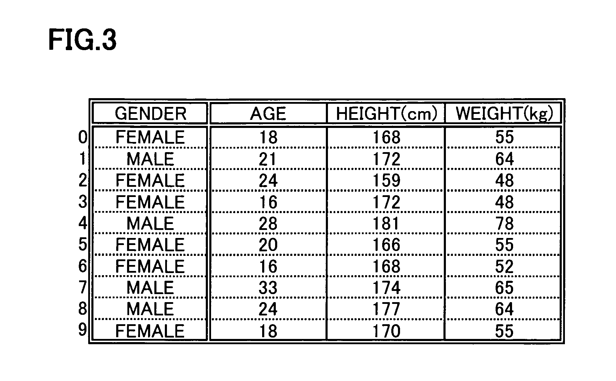

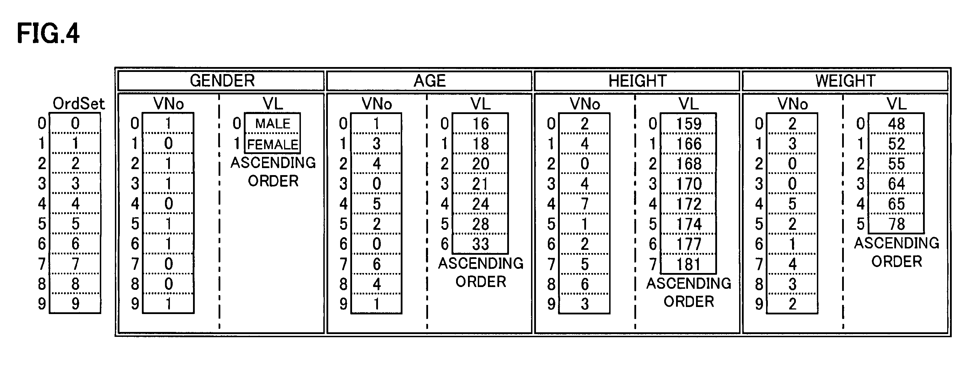

Fig. 3 is a view showing an example of tabular data. As shown here, in the tabular data, values are given to various items (in this example, "gender", "age", "height" and "weight") in each record. An information processing apparatus of the embodiment holds the tabular data based on a data format as shown in Fig. 4 in principle.

As shown in Fig. 4, in an ordered set array OrdSet, a record number is arranged as a value for each sequence number. In this example, since all records are expressed, the sequence number is coincident with the record number.

For example, with respect to the gender, the tabular data is expressed by a value list VL in which a value of "male" or "female" as an actual item value is sorted in a specified order, and a pointer array VNo to the value list, in which correspondingly to each of elements (record numbers) of the ordered set array OrdSet, a number in the value list indicated by the record number is stored. A combination of the value list VL and the pointer array VNo is called an "information block" (information block relating to the gender corresponds to reference character 401).

A value in the pointer array VNo at a position indicated by an element (record number) in the ordered set array OrdSet is specified, and an item value in the value list VL at a position indicated by the value is extracted, so that the item value corresponding to the record number can be acquired. An information block of another item has the same structure.

When a single computer is a single memory (although plural ones may exist physically, the term of the single memory is used in the meaning that they are disposed in a single address space and is accessed), the ordered set array OrdSet, the value list VL and the pointer array VNo constituting each information block have only to be stored in the memory. However, in order to hold a large amount of records, the memory capacity also becomes large in proportion to the size, and therefore, it is desirable that these can be distributed and arranged. Besides, also from the viewpoint of parallelization of processing, it is desirable that information distributed and arranged can be assigned and held.

Then, in the embodiment, data of records are assigned to and held by plural PMMs without overlap, and high speed retrieval, cross tabulation, and retrieval are realized by packet communication between the PMMs.

### [Compile processing]

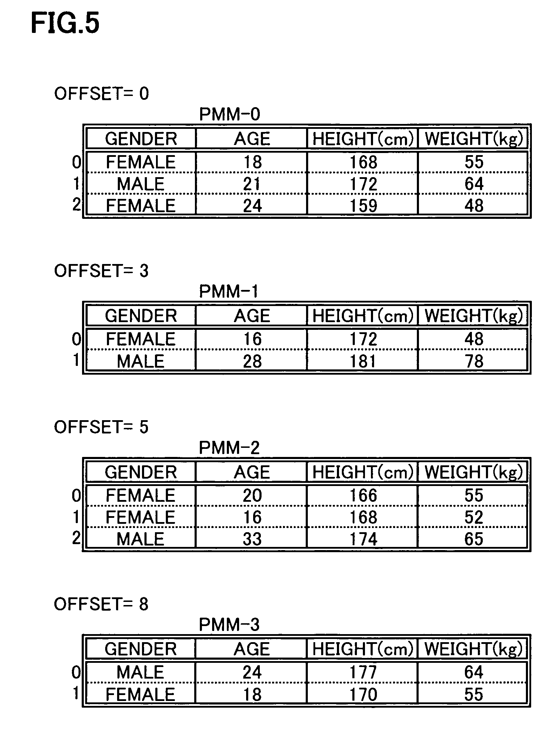

First, a processing (compile processing) in which data is distributed and arranged to plural PMMs and these are made usable will be described. For example, consideration will be given to a case where as shown in Fig. 5, data with the specified number of records is stored into four PMMs (PMM-0 to PMM-3). In this example, it is assumed that a series of data relating to record numbers 0 to 2, a series of data relating to record numbers 3 and 4, a series of data relating to record numbers 5 to 7, and a series of data relating to recording numbers 8 and 9 are respectively stored. Also in each PMM, the portion of the tabular data is stored in the format of the information block.

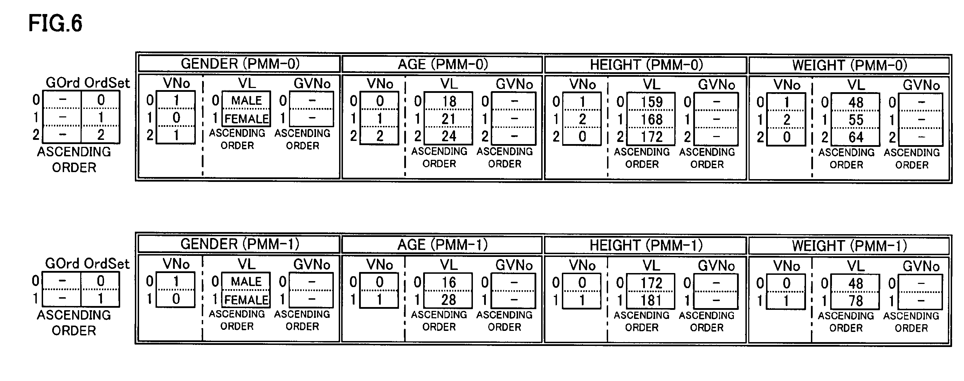

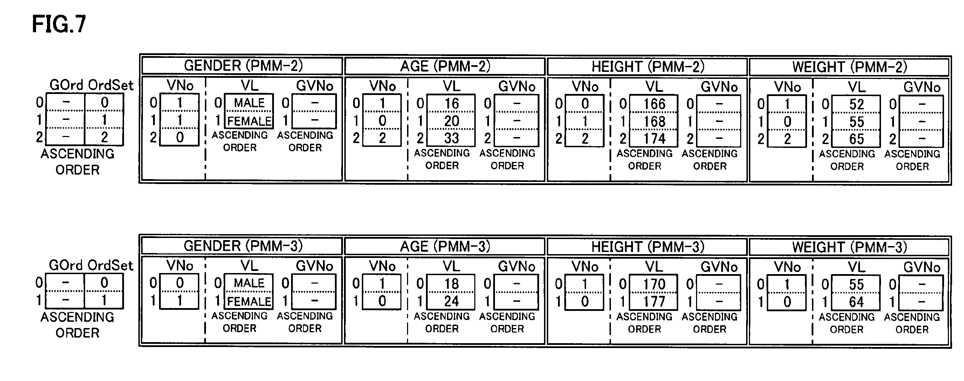

Fig. 6 and Fig. 7 are views showing examples of tabular data initially assigned to the PMM-0 to PMM-4, respectively. From these drawings, a subset of an information block of each item and the like are contained in each PMM. For example, in Fig. 6, an information block 601 of the item "gender" includes a subset VNo (this is also called a "pointer array") of the original pointer array VNo (see Fig. 4) and a subset VL (this is also called a "value list") of the original value list VL (see Fig. 4).

The number of elements of the pointer array VNo is coincident with the number of records assigned to the PMM. On the other hand, in the value list VL, only values indicated by the pointer array VNo are extracted. With respect to the item "gender", since the values of the pointer array VNo indicate all elements (item values) of the value list VL, the value list VL is coincident with the original value list VL. On the other hand, with respect to the items "age", "height" and "weight", it is understood that only values indicated by elements in the pointer array are extracted as a subset of the original value list VL from the original value list VL.

Further, in the information block to be assigned, in each PMM, in order that an element (item value) of the value list VL is suitably indicated by an element of the pointer array VNo, that is, in order that the consistency is kept also in the local processing (specification of the pointer value and specification of the item value) in the PMM, the element is converted from the corresponding element of the original pointer array VNo.

As described above, in the information block to be assigned, the value list VL holds only the elements (item values) necessary for the assigned information block. Thus, the consistency of the local processing is kept by the pointer array VNo and the value list VL. However, in order to hold the consistency of the processing among the PMMs, it is necessary to grasp a position of an element (item value) of the value list VL assigned to each PMM in the whole value list, that is, where each item value is in the specified order of the whole value list. Then, in this embodiment, in each information block to be assigned, a global value number array GVNo is arranged, and a number indicating a position of a value corresponding to an item value can be contained.

An offset value (OFFSET) for assignment of the subset of the information block is assigned to each PMM. The offset value OFFSET corresponds to a value of the head in the original ordered set OrdSet relating to the records assigned to the PMM.

Besides, in each PMM, in order to keep the consistency in the local processing, a new ordered set OrdSet is formed. The number of elements of the ordered set OrdSet is coincident with the number of records assigned to the PMM. On the other hand, in order to keep the consistency of the processing among the PMMs, it is necessary to grasp that a record assigned to each PMM has what number (element of the ordered set) in the whole. Thus, a global ordered set array GOrd containing numbers of respective records in the whole is provided.

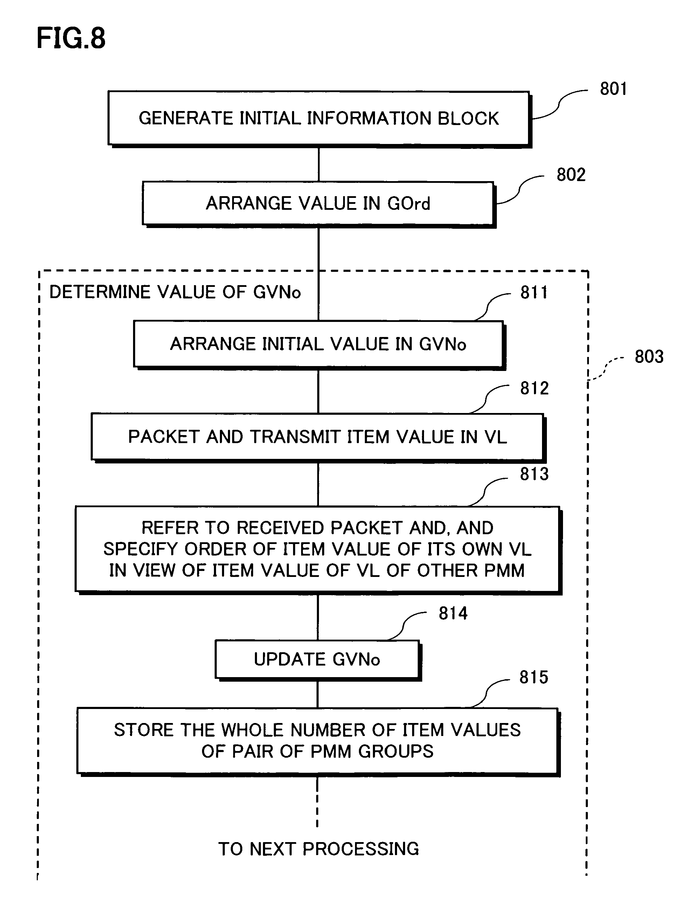

Fig. 8 is a flowchart roughly showing the compile processing of the embodiment. As shown in Fig. 8, first, initial information blocks shown in Figs. 6 to 7 are created (step 801). This is realized in such a way that the ordered set OrdSet, the pointer array VNo and the value list VL constituting each information block, and the offset value OFFSET, which are to be assigned to each PMM, are given to the PMM from, for example, another external computer. These arrays are stored in the memories 24 of the respective PMMs.

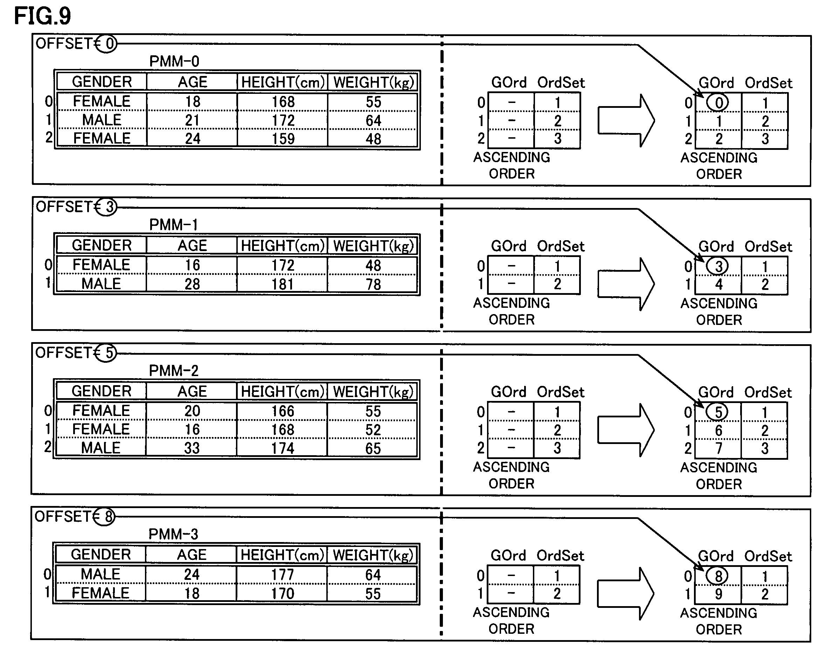

Subsequently to step 802, the procedure proceeds to a local processing in each PMM and a processing relating to packet communication between the PMMs. The control circuit 20 of each PMM refers to the offset value, calculates respective values to be arranged in the global ordered set array GOrd, and arranges the values in the array (step 802). Fig. 9 is a view showing the arrangement of values to the global ordered set array GOrd in the example shown in Figs. 6 to 7. Here, what is obtained by adding the offset value OFFSET to the value of the ordered set has only to be arranged at a corresponding position of the global ordered set array GOrd. Step 802 can be realized by a local processing in each PMM.

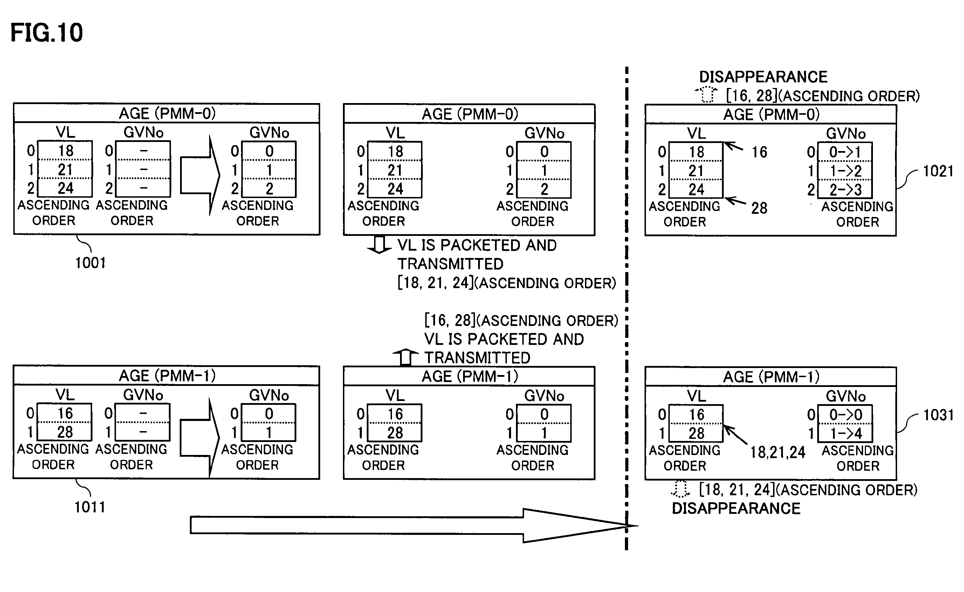

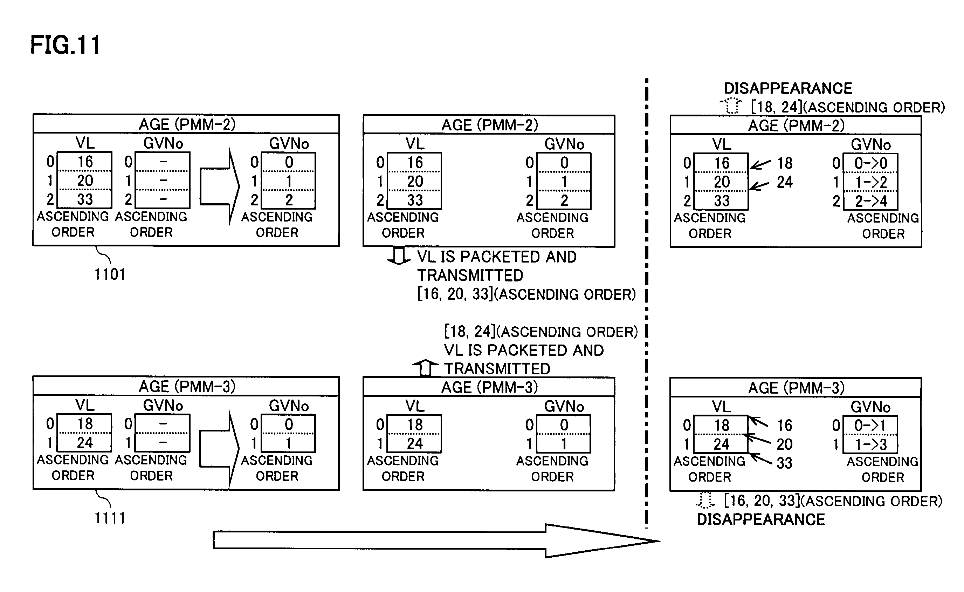

Next, values of the global value list number array GVNo are determined (step 803). In more detail, first, in each PMM, as respective elements of the global value number array, initial values are given in the ascending order (step 811). As shown in Fig. 10 and Fig. 11, for example, in the PMM-0 having three elements, values of 0, 1 and 2 in the ascending order from the head become the initial values (see reference character 1001). Also with respect to the other PMMs (PMM-1 to PMM-3) , the initial values of the global value list number arrays GVNo are set in parallel (see reference characters 1011, 1101, 1111).

Next, the adjacent PMMs form a pair, and one PMM forming the pair packets and transmits a series of elements (item values) contained in its own value list VL by using one bus (for example, the first bus 14) connecting the PMMs of the pair, while the other PMM packets and transmits a series of elements (item values) contained in its own value list VL by using the other bus (for example, the second bus 16) (step 812) . In the example of Fig. 10, a packet [18, 21, 24] is transmitted from the PMM-0 to the PMM-1, and a packet [16, 28] is transmitted from the PMM-1 to the PMM-0. Besides, in the example of Fig. 11, packets [16, 20, 33] and [18, 24] are transmitted from the PMM-2 and PMM-3, respectively.

Each PMM refers to the received packet, compares the values (item values of the other PMM) in the packet with the item values in its own value list VL, and specifies a relative value position (order) in view of the item values of the other PMM (step 813). In accordance with this position (order), the value of the global value number array GVNo is updated (step 814). Incidentally, the PMM temporarily stores the total number of the item values in the value lists of its own PMM and the other PMM forming the pair (step 815).

In the example of Fig. 10, the PMM-0 receives the packet [16, 28], compares it with its own VL [18, 21, 24]. Here, because of "16 < 18 < 21 < 24 < 28", the values of the global value number array GVNo are respectively updated to "1", "2" and "3" (see reference character 1021). On the other hand, the PMM-1 receives the packet [18, 21, 24], and compares it with its own VL [16, 28]. As a result, the values of the global value number array GVNo are respectively updated to "0" and "4" (see reference character 1031). As shown in Fig. 11, a similar processing is executed between the PMM-2 and the PMM-3. Incidentally, it is sufficient if the PMM transmits the received packet at a next timing in a direction in which the packet was transmitted. This packet is discarded since there is no receiver.

Next, the pair of the PMMs formed before is made a PMM group, a pair of adjacent PMM groups are formed. Incidentally, when the number of PMMs is a power of 2, a pair of PMM groups can be formed, however, when not so, a portion in which a pair of PMM groups can not be formed may be left as it is. For example, when the number of PMMs is three, a pair of a PMM group including the PMM-0 and the PMM-1 and the PMM-2 may be formed.

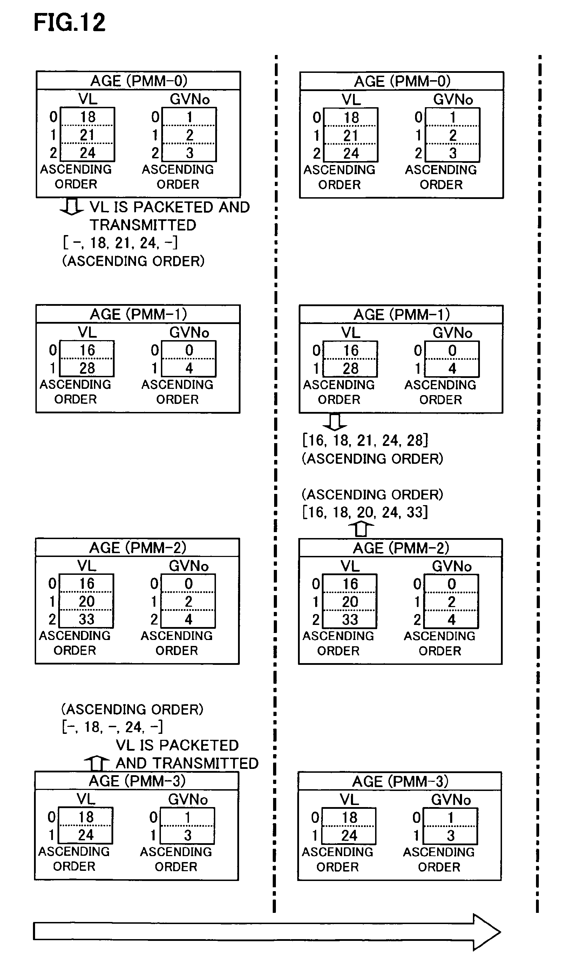

Thereafter, a packet is transmitted onto the bus (first bus) clockwise from an upstream side PMM of one PMM group in a clockwise direction, while a packet is transmitted onto the bus (second bus) counterclockwise from a downstream side PMM of the other PMM group in a clockwise direction. With respect to the example shown in Figs. 10 and 11, the packet is transmitted onto the first bus clockwise from the PMM-0, and the packet is transmitted onto the second bus counterclockwise from the PMM-3 (see Fig. 12).

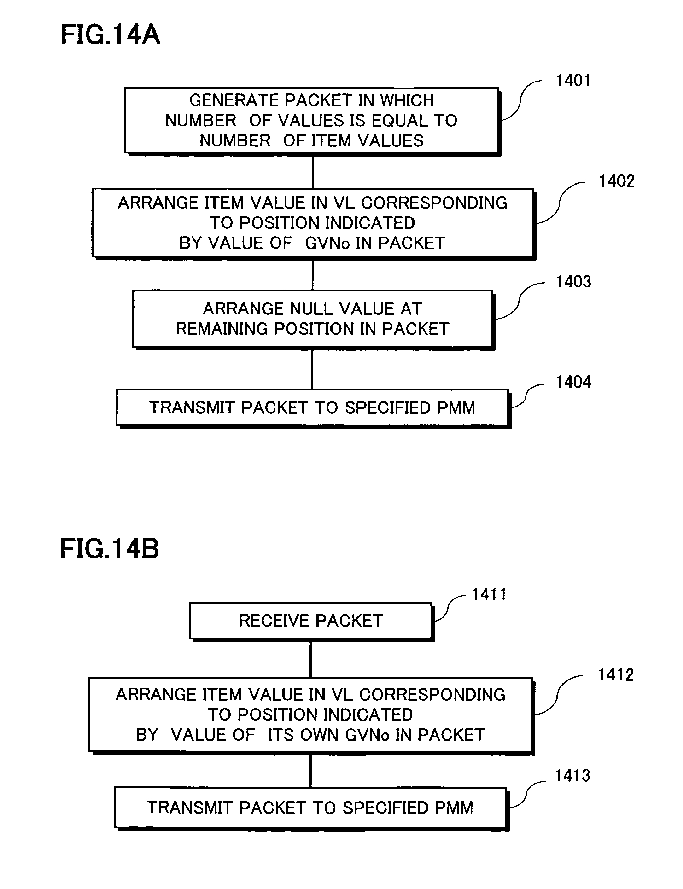

In more detail, as shown in Fig. 14A, the PMM to firstly transmit the packet creates such a packet that based on the number of item values stored at step 815 , the number of values is coincident with the number of item values, an element (item value) of the value list VL of the PMM itself is arranged at a corresponding position indicated by a value of the global value number array GVNo, while a NULL value is arranged at the other position (step 1401 to 1403), and transmits it to a next PMM in a specified direction (step 1404).

As shown in Fig. 12, for example, in the PMM-0, it is known that the pair of the PMM-0 and the PMM-1 has five item values. Accordingly, a packet [-, 18, 21, 24, -] (here, "-" denotes a NULL value) having five values is transmitted clockwise to the PMM-1 through the first bus. On the other hand, in the PMM-3, it is known that the pair of the PMM-2 and the PMM-3 has five item values. Accordingly, a packet [-, 18, -, 24 , -] is transmitted counterclockwise to the PMM-2 through the second bus.

The PMM having received the packet, as the destination of the packet, refers to its own global value number array GVNo, and arranges a corresponding item value at a specified position of the NULL value in the packet, that is, a position indicated by an element of the global value number array GVNo (step 1411, 1412). Thereafter, the PMM transmits a packet to a next PMM along the direction in which the packet has flown (step 1413) .

In Fig. 12, the PMM-1 having received the packet from the PMM-0 arranges the corresponding values "16" and "28" at positions indicated by the elements "0" and "4" of its own global value number array GVNo among the positions where the NULL values are arranged. By this, a packet [16, 18 , 21, 24, 28] is transmitted clockwise through the first bus. Besides, the PMM-2 having received the packet from the PMM-3 similarly transmits a packet [16, 18, 20, 24, 33] counterclockwise through the second bus.

In the example, although a group of PMMs includes two PMMs, in the case where a group of PMMs includes three or more PMMs, with respect to the PMM having received a packet, the processing shown in Fig. 14B is further executed.

Next, a description will be given to a processing to be executed when a packet is received by a PMM constituting the other group of PMMs paired with the one group of PMMs.

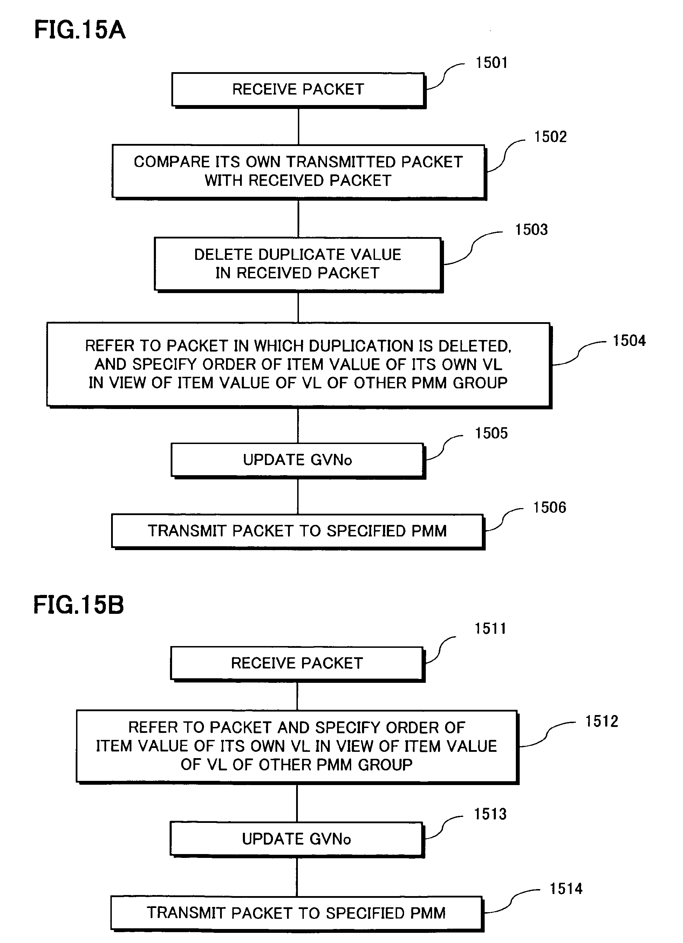

As shown in Fig. 15A, when the PMM constituting the other group of PMMs receives a packet (step 1501), the PMM compares the received packet with its own transmitted packet (step 1502) , and when an item value equal to that of its own transmitted packet, that is, a duplicate item value exists in the received packet, this is deleted (step 1503). Next, the PMM refers to the packet in which the duplicate item value was deleted, compares the value in the packet (item value of the other group of PMMs) with the item value in its own value list, and specifies a relative value position (order) in view of the item value of the other group of PMMs (step 1504). In accordance with this position (order), the value of the global value number array GVNo is updated (step 1505).

The packet after the duplicate item value is deleted is transmitted to the adjacent PMM constituting the same group of PMMs through the bus (step 1506).

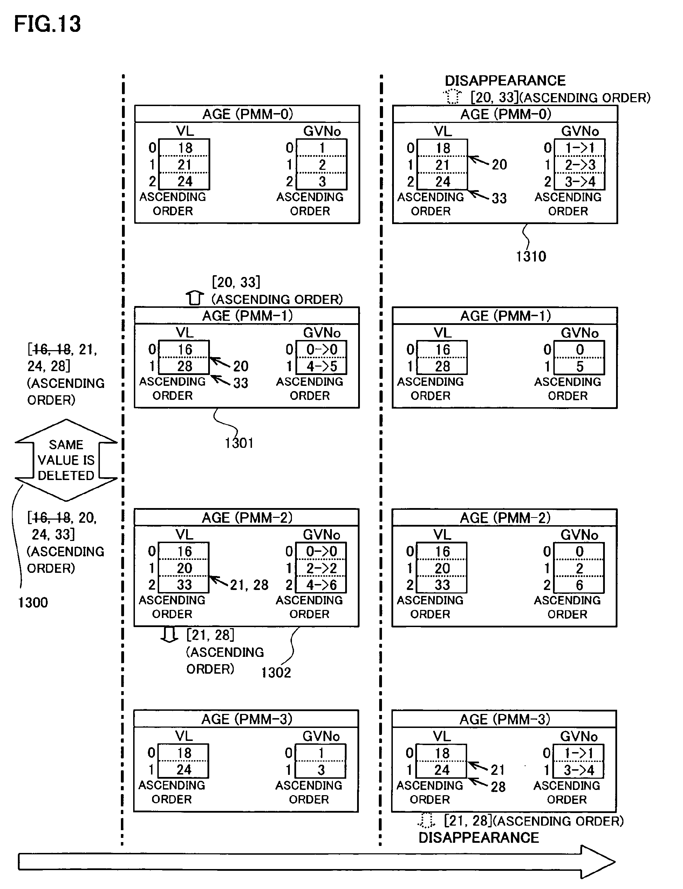

In Fig. 13 , the PMM-1 receives a packet [16 , 18 , 20, 24, 33] from the PMM-2 as a PMM constituting the adjacent PMM group counterclockwise. On the other hand, the PMM-1 transmits a packet [16, 28, 21, 24, 28] to the PMM-2 clockwise. Then, the PMM-1 compares both, and since 16, 18 and 24 are duplicate in the received packets, these are deleted, and update is made to a packet [20, 33] (see reference character 1300). Then, in view of the item values "20" and "33" in the packet, because of "16 < 20 < 28 < 33", in its own global value number array GVNo, the value "0" corresponding to the item value "16" is not updated, and the value "4" corresponding to the item value "28" is updated to "5" (see reference character 1301). Besides, the packet [20, 33] is transmitted to the PMM-0 counterclockwise.

On the other hand, the PMM-2 receives a packet [16 , 18 , 21, 24, 28] from the PMM-1 as the PMM constituting the adjacent PMM group clockwise. Also in the PMM-2, the received packet is compared with the transmitted packet, a duplicate value in the received packet is deleted, and update is made to a packet [21, 28] (see reference character 1300) . Next, in view of the item values in the packet, because of "16 < 20 < 21 < 28 < 33", in its own global value number array GVNo, the PMM-2 does not update the values "0" and "2" corresponding to the item values "16" and "20" , while the value "4" corresponding to the item value "33" is updated to "6" (see reference character 1302). Besides, the packet [21, 28] is transmitted to the PMM-3 clockwise.

As shown in Fig. 15B, the PMM having received the packet from the PMM constituting the same PMM group (see step 1511) executes the comparison between the value in the received packet and the item value in its own value list VL, the specification of the relative value position (order) of its own item value (step 1512), and the update of the global value number array GVNo based on the specified position (order) (step 1513). Besides, the packet is transmitted to a next PMM in the same direction as the direction of the transmission (step 1514). Incidentally, when there is no next PMM, the packet is discarded. On the other hand, when there is a next PMM, the processing of steps 1511 to 1513 is executed in the PMM.

In Fig. 13, reference character 1310 denotes update of the global value number array GVNo in view of the transmitted packet [20, 33], and reference character 1313 denotes update of the global value number array GVNo in view of the transmitted packet [21, 28].

In this way, the global ordered set array GOrd to establish consistency of the processing between PMMs, and the global value number array GVNo are created, so that the compile processing is completed. Incidentally, with respect to the global value number array, the processing is executed for each item, and the global value number array for each item is obtained.

When the compile processing is ended, the processing such as retrieval, cross tabulation, or sort can be smoothly and quickly executed.

### [Retrieval processing]

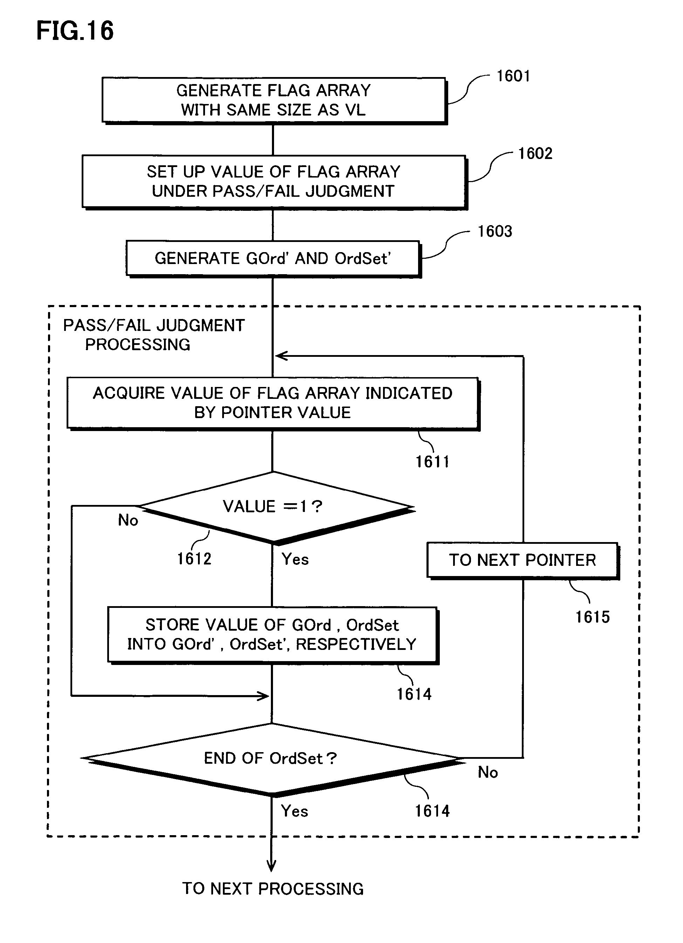

Next, the retrieval processing will be described. As shown in Fig. 16, first, each PMM creates a flag array with the same size as a value list VL with respect to an item as a retrieval object (step 1601), and next, sets up a value of the flag array under a pass/fail condition (step 1602). At this setup, "1" is set as a value of the flag array corresponding to an item value coincident with the retrieval condition, and "0" is set as a value of the flag array other than that.

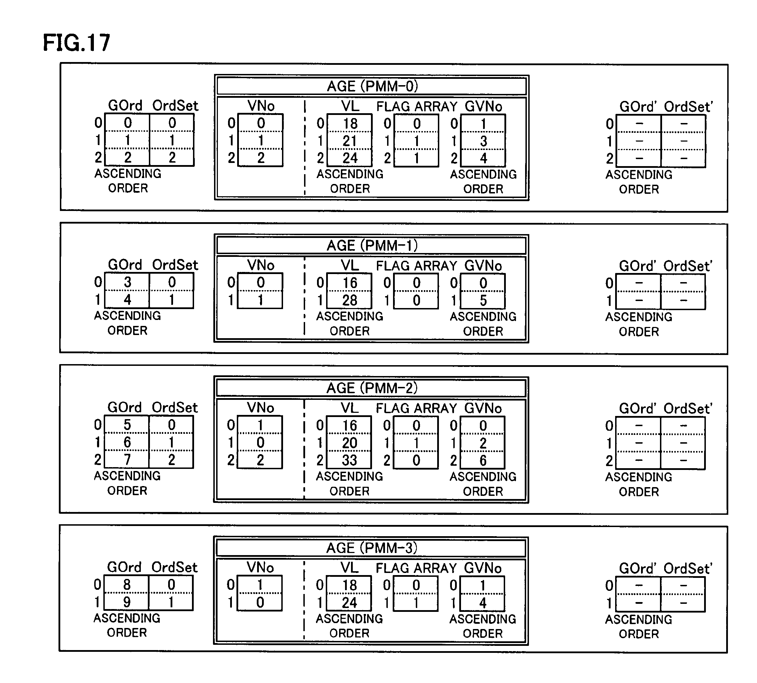

Next, each PMM creates a new global ordered set array GOrd' as a retrieval result storage area and OrdSet' (step 1603). Fig. 17 is a view showing an example of a state in which a new global ordered set array and ordered set array are created as a flag array in which values are set up and an area. In this example, with respect to the item of "age", records of "from 20 years old to 24 years old" are retrieved. Accordingly, in each PMM, a value of the flag array corresponding to one in which the item value is from 20 to 24 is "1".

Next, a pass/fail judgment is made (step 1604). In this processing, a value (pointer value) of the pointer VNo to the value list is found for each value of the ordered set array OrdSet, and a value of the flag array indicated by the pointer value is acquired (step 1611). When this value is "0" ( NO (No) at step 1612), no processing is performed. On the other hand, when the value of the flag array is "1" (YES (Yes) at step 1612), values of the global ordered set array GOrd relating to the processing and the ordered set array OrdSet are sequentially stored into the new global ordered set array GOrd' and ordered set array OrdSet' (step 1613).

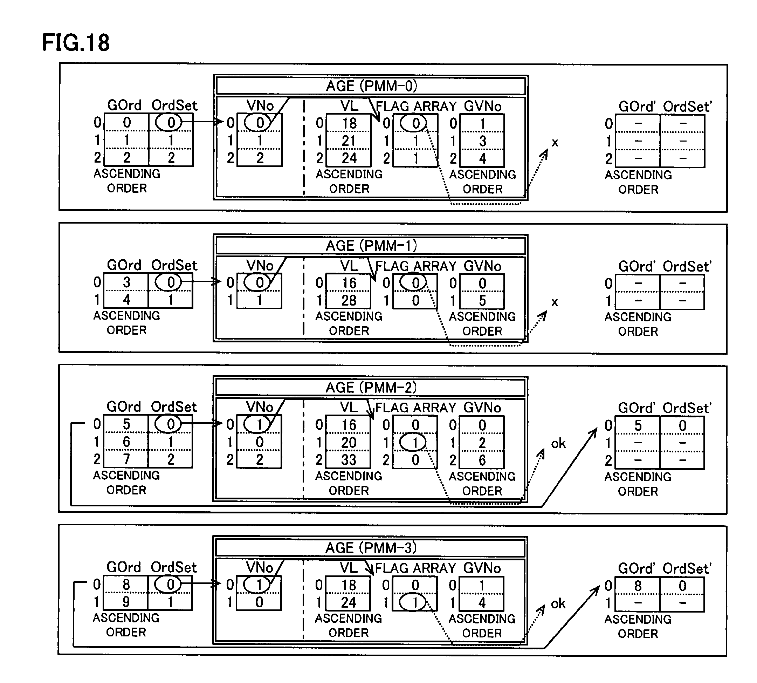

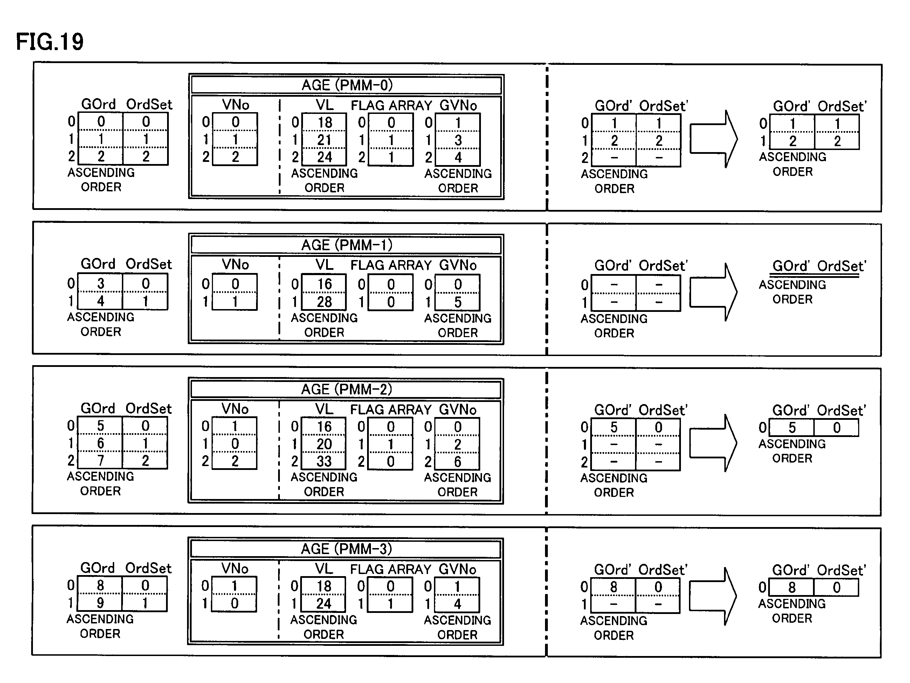

The processing of steps 1611 to 1613 is repeated to the last element of the ordered set array (see steps 1614 and 16515) . The processing of Fig. 16 is executed locally and in parallel in the respective PMMs. Fig. 18 shows an example of a state in which the processing of Fig. 16 is executed, and values are arranged in the new global ordered set array GOrd' and ordered set array OrdSet' locally and in parallel. Besides, Fig. 19 shows a state in which unnecessary areas are deleted (see reference characters 1901 to 1904).

After the above processing, a transition is made to a processing relating to packet communication between the PMMs. First, each PMM creates a new global ordered set array GOrd' ' for storing a position (order), in the whole PMM, of a record matching a retrieval condition (step 2001), and initial values are stored in the array in the ascending order (step 2002). The size of the new global ordered set GOrd'' is coincident with the size of the array GOrd' or GOrd.

Next, a pair is formed of adjacent PMMs, one PMM of the pair uses one bus (for example, the first bus 14) connecting the PMMs of the pair, packets the elements of the array GOrd' previously created by the processing shown in Fig. 16, and transmits it to the other PMM of the pair (step 2003). On the other hand, the other PMM also uses the other bus (for example, the second bus 16) connecting the PMMs of the pair, packets the elements of the array GOrd', and transmits it to the PMM of the pair.

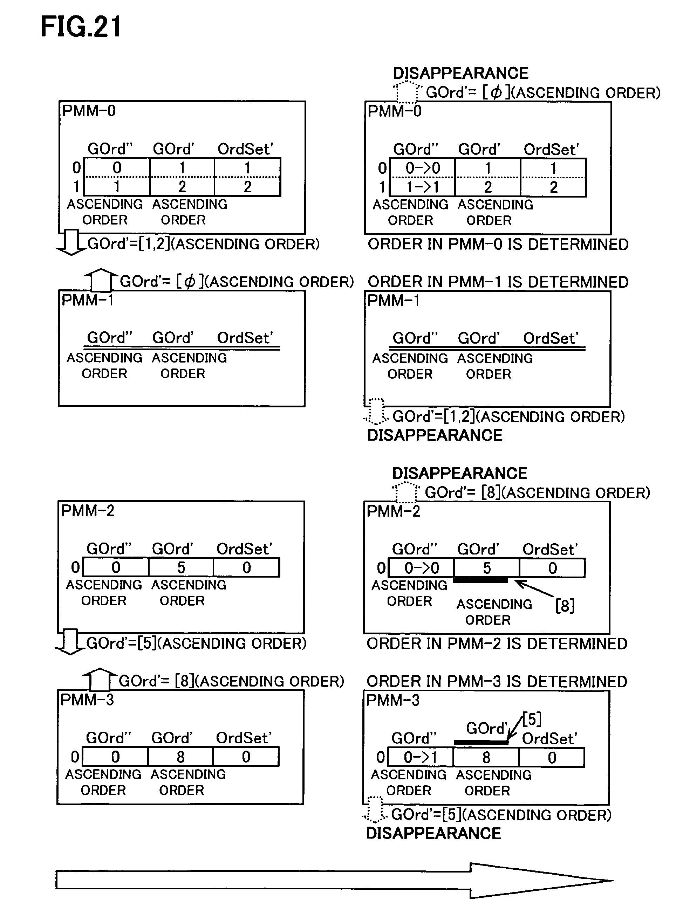

In an example of Fig. 21, a packet [1, 2] corresponding to the GOrd' is transmitted to the PMM-1 from the PMM-0, and a packet [Φ] (null set) corresponding to the GOrd' is transmitted from the PMM-1. The exchange of packets is similarly performed between the PMM-2 and the PMM-3.

When receiving the packet, the PMM refers to the received packet, compares values in the packet with values in its own array GOrd', specifies the position (order) of the value in view of the array GOrd' of the other PMM (step 2004). In accordance with this position, the value of the new global ordered set array GOrd' ' is updated (step 2005). By this, the order of the item value in the pair of PMMs is fixed. Although the packet is transmitted in the same direction as the direction of the reception, since there is no receiver here, it is discarded. Incidentally, the PMM temporarily stores the total number of elements of the array GOrd' of its own PMM and the other PMM of the pair (step 2006).

In the example of Fig. 21, the PMM-0 refers to the packet (elements in the null set) given from the PMM-1. Since the elements of the packet are in the null set, the value of the array GOrd'' is not changed. Also in the PMM-1, since the element of the array is originally null, no processing is performed.

On the other hand, the PMM-2 refers to the packet [8] given from the PMM-3, and compares it with its own array GOrd' . Here, because of "8 > 5", the value of the GOrd' is not changed. On the other hand, in the PMM-3, the received packet [5] is compared with the value of its own GOrd'. Here, because of "5 < 8", the value of GOrd'' is updated from "0" to "1".

Next, the previously formed pair of PMMs is made a PMM group, and a pair of adjacent PMM groups is formed. This is similar to the case of the compile processing. Thereafter, a packet is transmitted onto the bus (first bus) clockwise from an upstream side PMM of one PMM group in a clockwise direction, while a packet is transmitted onto the bus (second bus) counterclockwise from a downstream side PMM of the other PMM group in a clockwise direction. In Fig. 21, the packet is transmitted onto the first bus clockwise from the PMM-0, and the packet is transmitted onto the second bus counterclockwise from the PMM-3.

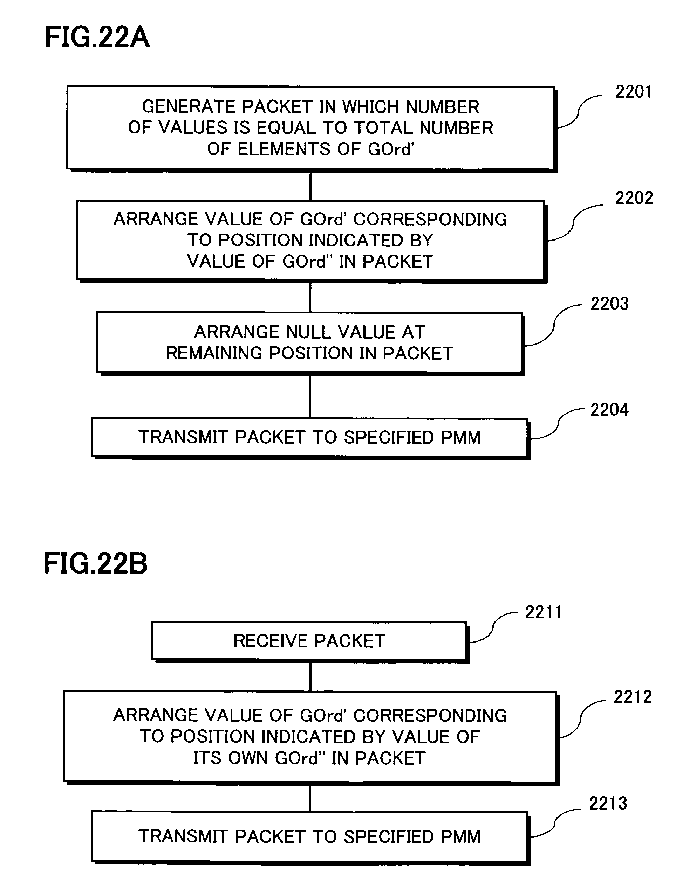

In more detail, as shown in Fig. 22A, the PMM to first transmit the packet creates such a packet that based on the total number of the array GOrd' stored at step 2005, the number of values is coincident with the total number, the value of the array GOrd' of the PMM itself is arranged at the position indicated by the value of the corresponding array GOrd' ' , while the NULL value is arranged at the other position (steps 2201 to 2203), and transmits it to a next PMM in a specified direction

### (step 2204).

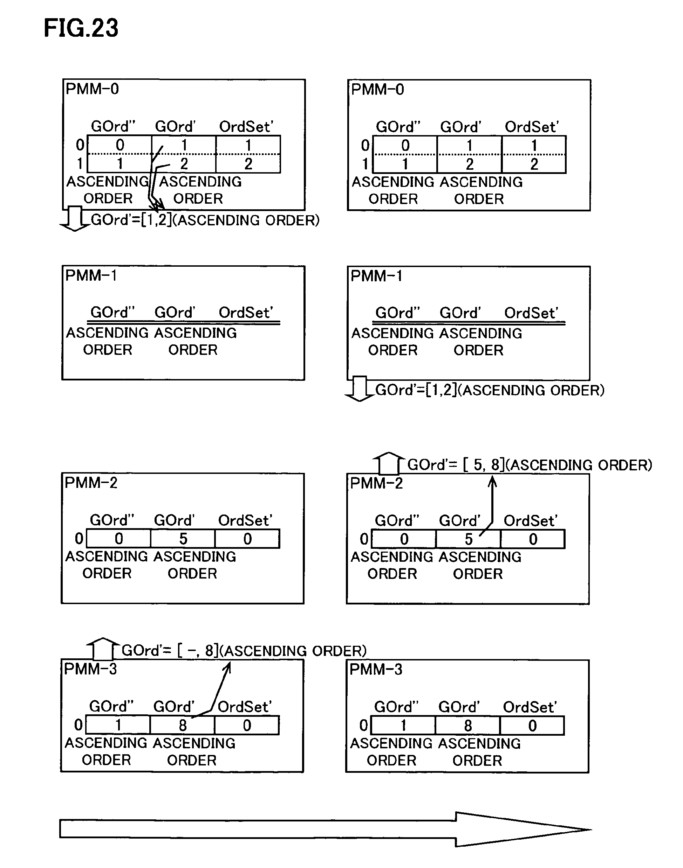

As shown in Fig. 23, for example, in the PMM-0, it is known that there are two item values in the PMM-0 and the PMM-1. Accordingly, a packet [1, 2] having two values is transmitted to the PMM-1 through the first bus clockwise. On the other hand, in the PMM-3, it is known that there are two item values in the PMM- 2 and the PMM- 3 . Accordingly, a packet [-, 8] (here , "-" denotes a NULL value) having two values is transmitted to the PMM-2 through the second bus counterclockwise.

As the destination of the packet, as shown in Fig. 22B, the PMM having received the packet refers to its own array GOrd' ' , and arranges the value of the corresponding array GOrd at a specified position of the NULL value in the packet, that is, a position indicated by the value of the array GOrd' (steps 2211 and 2212). Thereafter, the PMM transmits the packet to a next PMM along the direction in which the packet has flown (step 2213).

In Fig. 23, the PMM-1 having received the packet from the PMM-0 transmits the packet directly through the first bus clockwise since there is no element in the GOrd'' (that is, null). Besides, the PMM-2 having received the packet from the PMM-3 arranges the element of its own GOrd' at a specified position of the packet, and transmits a packet [5, 8] through the second bus counterclockwise.

In the above example, although one group of PMMs include two PPMs, in the case where one group of PMMs include three or more PMMs, the processing shown in Fig. 22B is further executed in the PMM having received the packet.

Next, a description will be given to a processing executed when a packet is received by a PMM constituting the other group of PPMs paired with the one group of PMMs. As shown in Fig. 23, the PMM (see step 2401) having received the packet directed to itself compares the value in the received packet with the value in its own array GOrd' , and specifies a relative position (order) of the value in the array GOrd' (step 2402). Next, based on the specified order, the PMM updates the array GOrd' ' (step 2403). Thereafter, the PMM transmits the packet to a next PMM along the same direction as the direction of the transmission (step 2404). Incidentally, when there is no next PMM, the packet is discarded. On the other hand, when there is a next PMM, the processing of steps 2401 to 2404 is executed in the PMM.

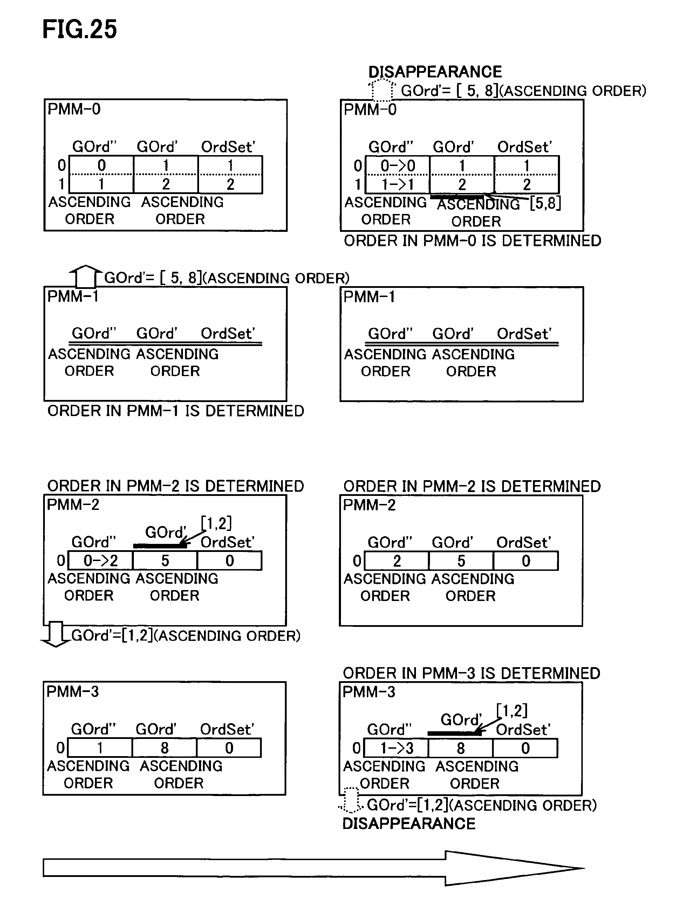

In an example of Fig. 25, since the PMM-1 having received the packet [5 , 8] from the PMM-2 does not have an element in its own array GOrd', it transmits the packet directly to the PMM-0 along the same direction. Besides, the PMM-2 having received the packet [1, 2] from the PMM-1 compares the value of the packet with the value of the array GOrd' . Here, because of "1 < 2 < 5", the value of the GOrd'' is updated from "0" to "2". Further, the packet is transmitted to the PMM-3.

Also in the PMM-0 having received the packet from the PMM-1, the received packet is compared with the value of its own GOrd'. Here, because of "1 < 2 < 5 < 8 " , the value of the GOrd' ' is not changed. On the other hand, in the comparison between the received packet in the PMM-3 having received the packet from the PMM-2 and its own GOrd', because of "1 < 2 < 8", the value of the GOrd'' is updated from "1" to "3".

The processing as stated above is executed in parallel, so that the values of the array GOrd' ' of the PMM become definite. The value of the array GOrd'' denotes the order of the record extracted by the retrieval in the whole, that is, the global order. When the GOrd'' is made the new GOrd, when the record is sequentially extracted in accordance with the value in the array GOrd, it becomes possible to acquire the retrieval result in accordance with the specified order.

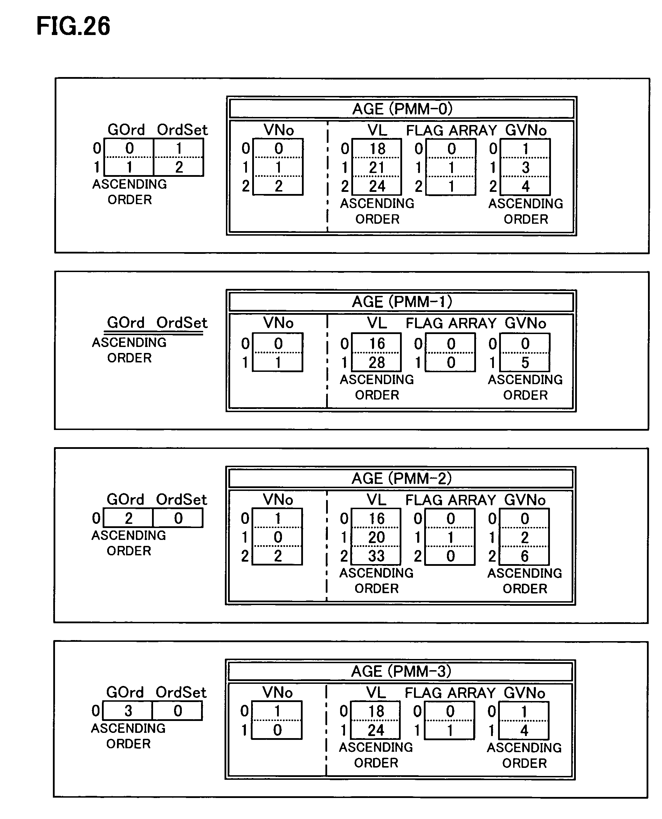

The array GOrd of each PMM in Fig. 26 is a new array obtained as a result of the retrieval processing. When the value of the corresponding array OrdSet , and the value of the value list VL indicated by this value are extracted in the ascending order of the value of this array GOrd, with respect to the item of "age", the record of "from 20 yeas old to 24 yeas old" can be listed in the order of record number (ordered set).

### [Cross tabulation processing]

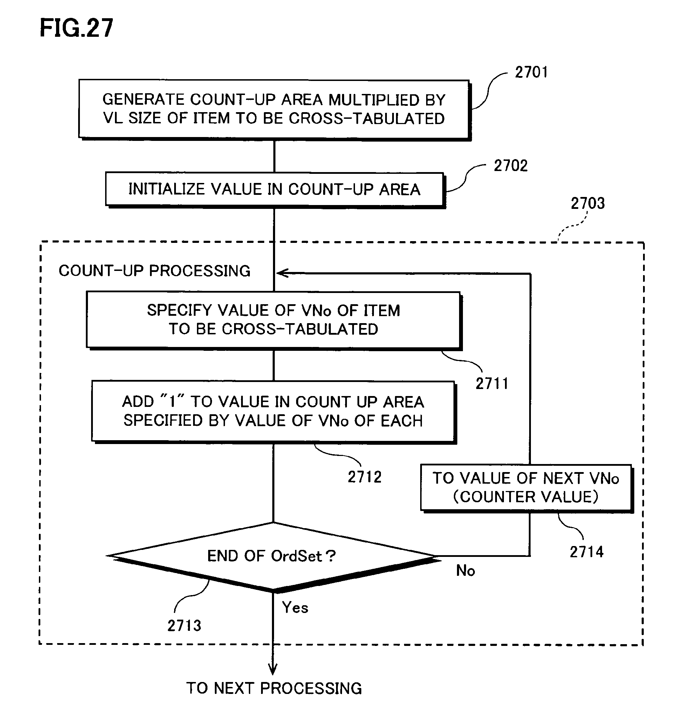

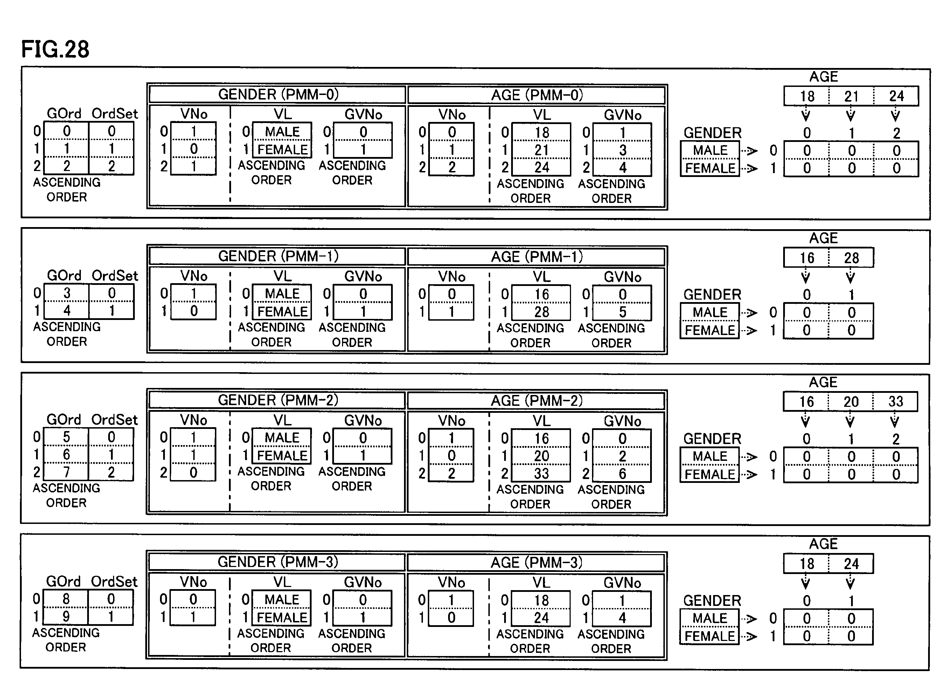

Next, a cross tabulation processing will be described. Also here, the processing is started from the state where the compile processing is ended. As shown in Fig. 27, each PMM creates a count-up area with a size obtained by multiplying sizes of plural value lists VL relating to items to be cross-tabulated (step 2701). Next, the respective values in this area are initialized to "0" (step 2702). Fig. 28 shows a state in which with respect to the items of "gender" and "age" , an area with a size of (size of the value list VL relating to "gender") x (size of the value list VL relating to "age") is formed in each PMM, and the initial values "0" are respectively given. Next, each PMM executes the count-up processing to each of the count-up arrays (step 2703). In more detail, each PMM refers to the value of the ordered set array OrdSet, and specifies the value of the pointer array VNo of each of the items to be cross-tabulated (step 2711). Next, the value of the position in the area specified by the values of the plural pointer arrays VNo to be cross-tabulated is counted up (step 2712). The processing as stated above is repeated to the end of the ordered set array OrdSet (see steps 2713 and 2714).

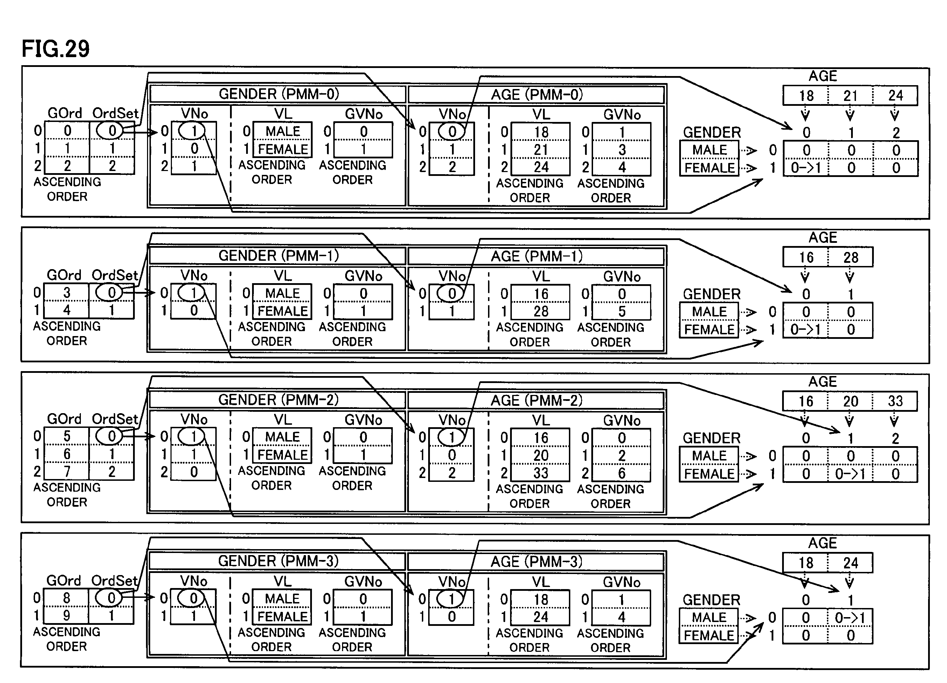

Fig. 29 is a view showing an example of the count-up in each PMM. For example, in the PMM-0, the value of the pointer array VNo of the item "gender" at the position indicated by the element "0" of the ordered set array OrdSet is "1", and the value of the pointer array VNo of the item "age" is "0". Accordingly, the value of the area specified by (gender, age) = (1, 0) in the count-up area is counted up from "0" to "1". Also in the other PMM, it is understood that a similar processing is executed.

When the count-up is ended, in subsequent processing, in the count-up area, as an axis, instead of an actual item value, the value of the global value number array GVNo of each item is set to a key. That is, by specifying the value of the global value number array GVNo, the value of the count-up area is specified.

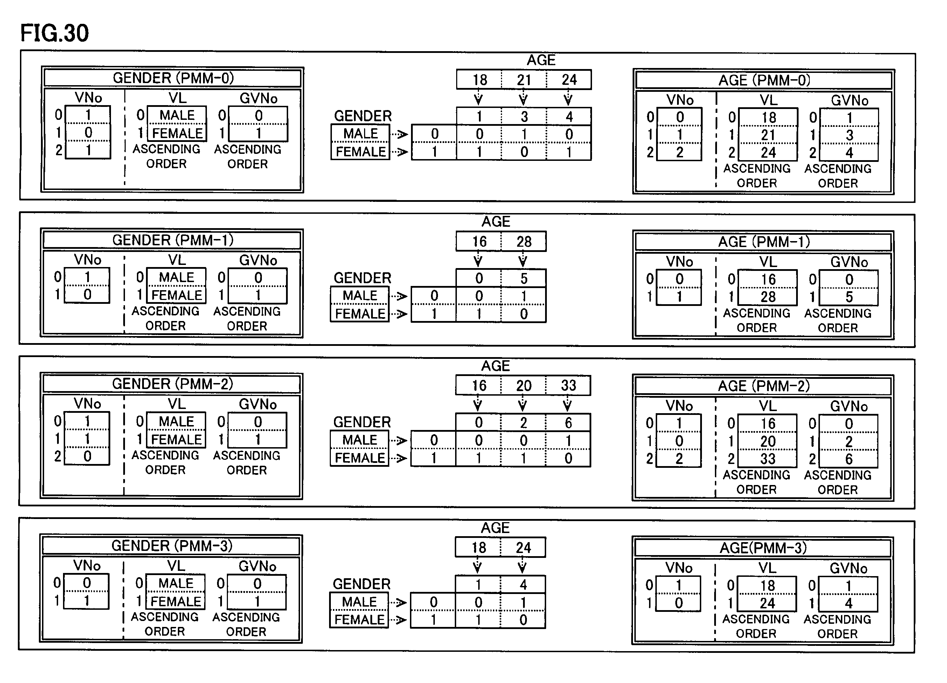

Fig. 30 is a view showing a state in which the value of the global value number array GVNo is used in order to specify a value of the global area in each PMM. Actually, a processing to give a value as an item of such a global area is not executed, but these arrays GVNo are merely used in the following processing.

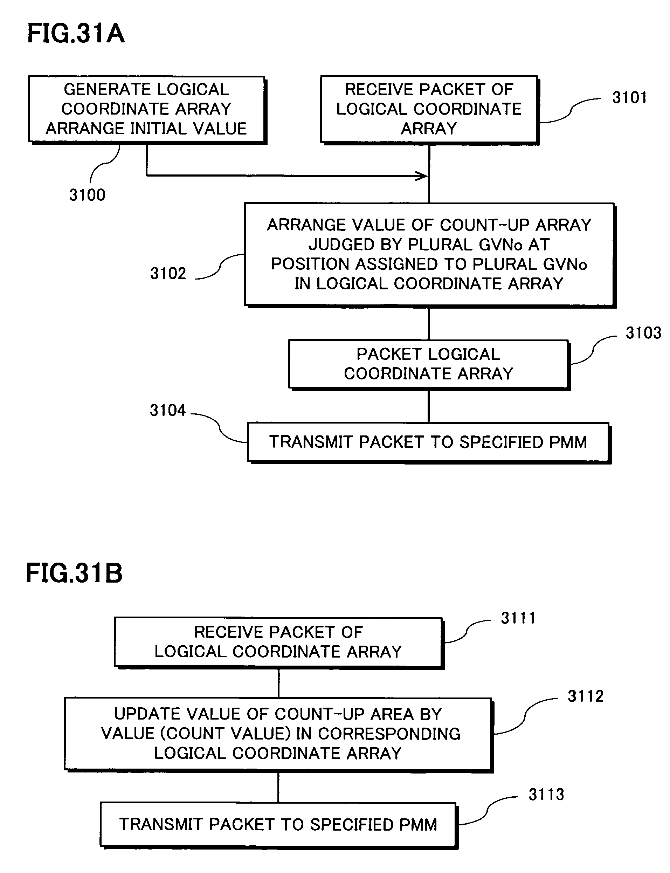

In the PMM, a common logical coordinate array is used, and respective values of the count-up area are summed. In more detail, as shown in Fig. 31A, when a PMM receives a packet of a logical coordinate array (step 3101), values of the count-up area specified by the arrays GVNo of the plural items of the tabulation are added to the values of the positions assigned to the arrays GVNo of the plural items in the logical coordinate array (step 3102). Incidentally, in the PMM which first creates the logical coordinate array, and executes the processing to set the value, instead of the reception of the logical coordinate array, the creation of the logical coordinate array and the arrangement of the initial value are executed (see step 3100).

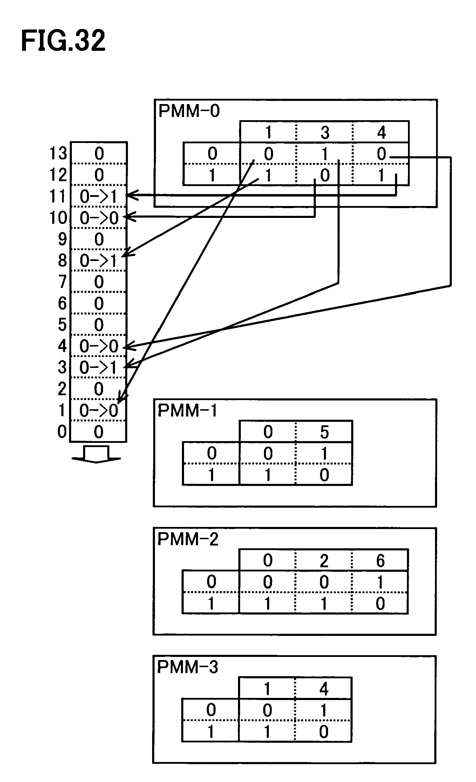

The logical coordinate array will be described. The logical coordinate array includes values of the logical coordinate and count values corresponding thereto. The value of the logical coordinate is made to uniquely correspond to the multi-dimensional coordinate of the items as the object of the cross tabulation. For example, in the case where the cross tabulation is performed with the item "gender" and the item "age", (the value of the array GVNo relating to the item "gender", the value of the array GVNo relating to the item "age") is made to uniquely correspond to the value of the logical coordinate. This correspondence is previously notified to each PMM and is stored in each PMM. Fig. 32 is a view showing an example of count-up in the logical coordinate array in the PMM-0 in which the logical coordinate array is initially created. In this example, the logical coordinate and the multi-dimensional coordinate are made to correspond to each other as follows.
0 = (value "0" of GVNo of item "gender", value "0" of GVNo of item "age")
1= (value "0" of GVNo of item "gender", value "1" of GVNo of item "age")
2= (value "0" of GVNo of item "gender", value "2" of GVNo of item "age")
3= (value "0" of GVNo of item "gender", value "3" of GVNo of item "age")
4= (value "0" of GVNo of item "gender", value "4" of GVNo of item "age")
12= (value "1" of GVNo of item "gender", value "5" of GVNo of item "age")
13= (value "1" of GVNo of item "gender", value "6" of GVNo of item "age")

Since the values of the coordinates (0,3), (1,1) and (4,1) are set to "1", the PMM-0 counts up the values of the count-up area whose logical coordinates correspond to "3", "8" and "11" by the set value, respectively.

After the processing as stated above, the PMM packets the logical coordinate array (step 3103), and transmits it to the adjacent specified PMM (step 3104) . In the example of Fig. 32, the packet is transmitted to the PMM-1.

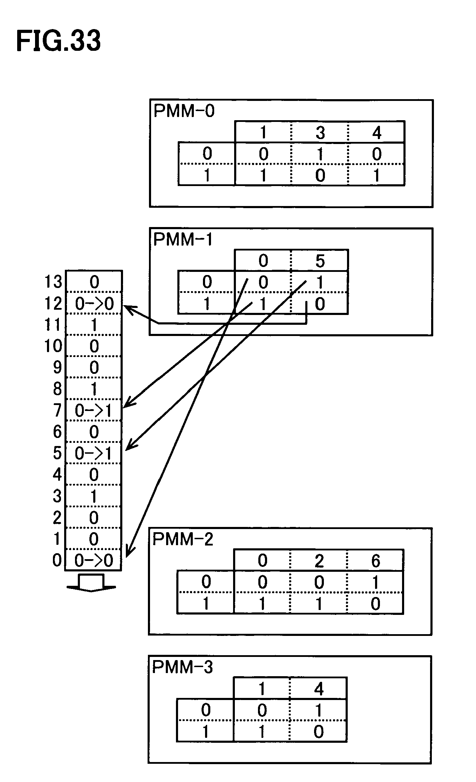

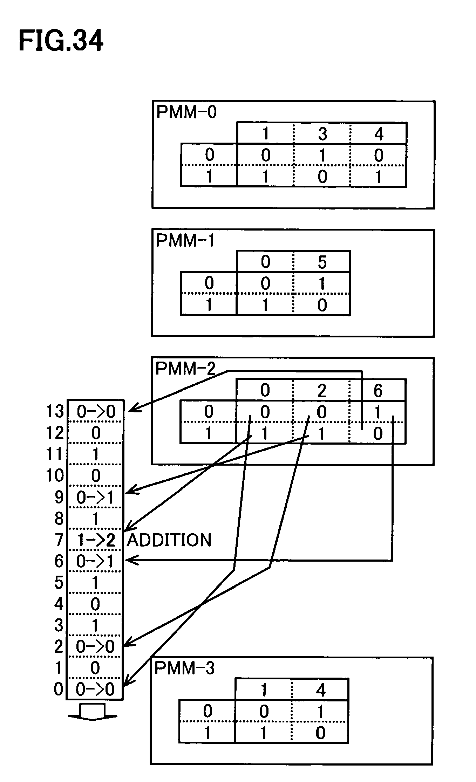

The received PMM similarly executes the processing of Fig. 30, and transmits the packet to the adjacent PMM along the direction in which the packet has been previously transmitted. Figs. 32 to 35 are views showing the count-up processing of the logical coordinate array sequentially executed in the PMM-1 to the PMM-3.

In this way, the logical coordinate array is given to each PMM, and the value of the logical coordinate array becomes definite according to the value of the count-up area. From the final PMM (in the example, PMM-3), the packet of the logical coordinate array whose value becomes definite is again given to the PMM which has initially created the logical coordinate array. As shown in Fig. 31B, when the PMM again receives the packet of the logical coordinate array again (step 3111), the value of the count-up area is updated to the value in the corresponding logical coordinate array (step 3112). That is, although the processing of Fig. 31A is a mode in which the value of the count-up area is written in the logical coordinate array, in the processing of Fig. 31B, the value of the logical coordinate array is written in the count-up array. Here, similarly to the processing of Fig. 31A, the correspondence relation between the coordinate to specify each value of the count-up area and the logical coordinate array is used.

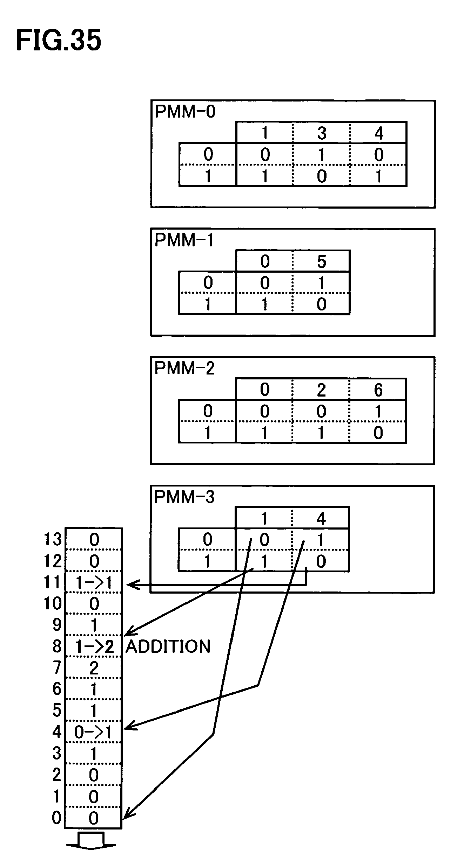

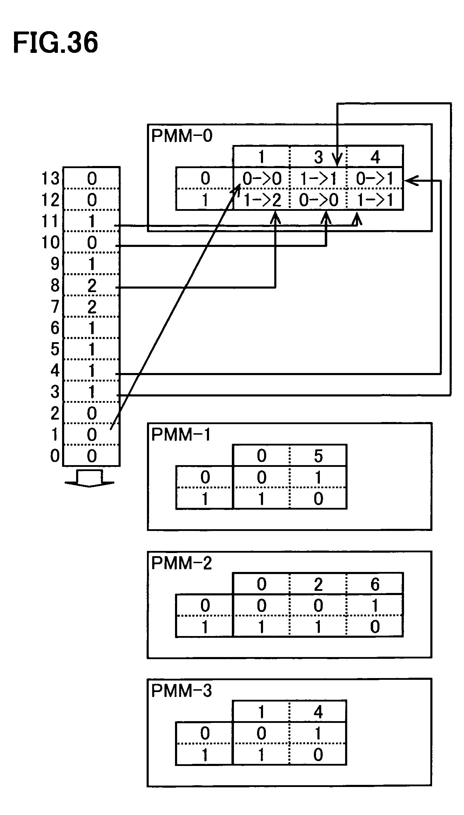

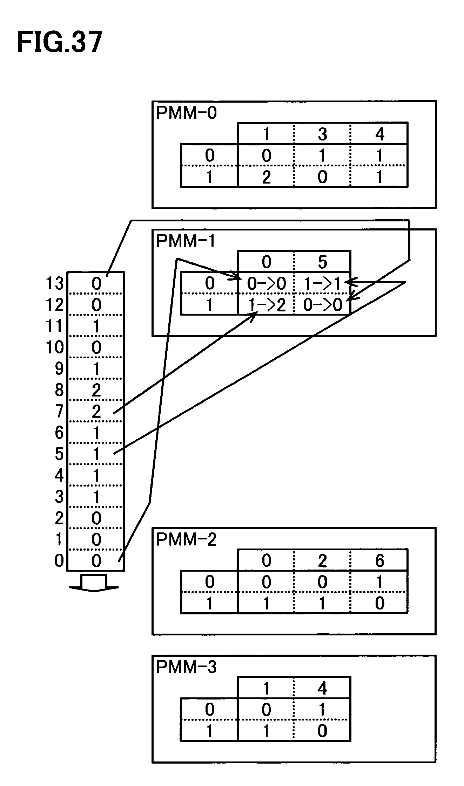

When the update of the value is ended, the PMM transmits the packet to the adjacent specified PMM along the direction in which the packet has been transmitted (step 3113). Fig. 36 and Fig. 37 are views respectively showing the capture processing (processing of Fig. 35) of the value of the logical coordinate array sequentially executed in the PMM-0 to the PMM-3.

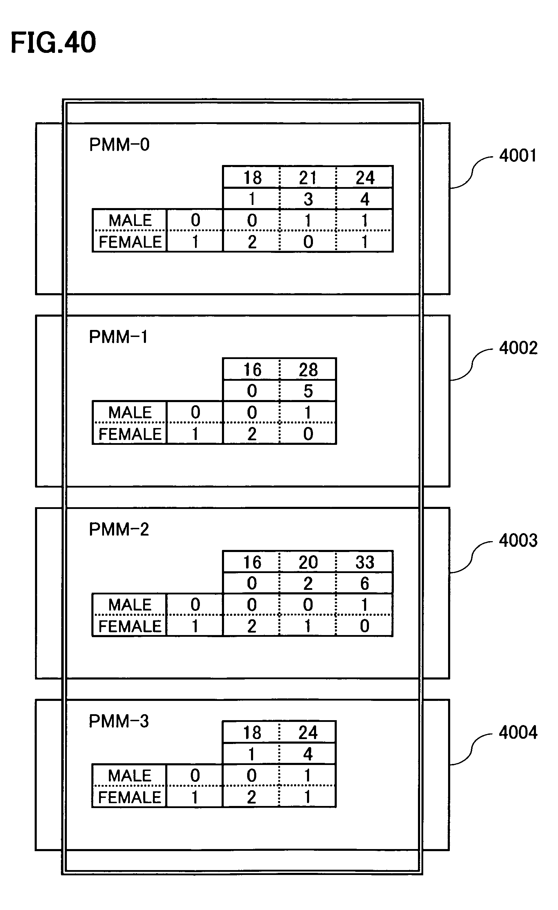

In this way, as shown in Fig. 40, in each PMM, for each multi-dimensional coordinate of the items as the object of the cross tabulation, the tabulated value relating to the combination of the item values of the items can be obtained. In Fig. 40, reference characters 4001 to 4004 respectively denote the tabulation result relating to the PMM-0 to the PMM-3. The array (count-up area) of the tabulation results is stored in the memory of the PMM.

### [Sort processing]

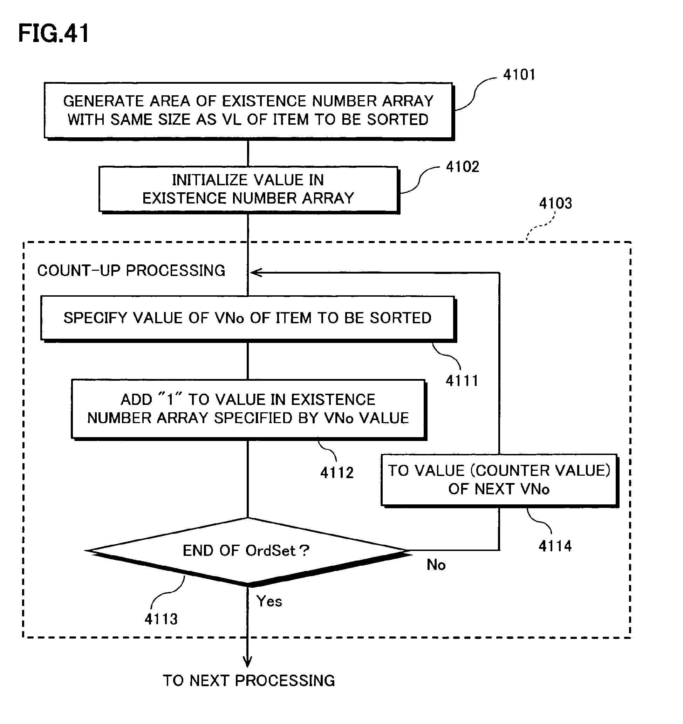

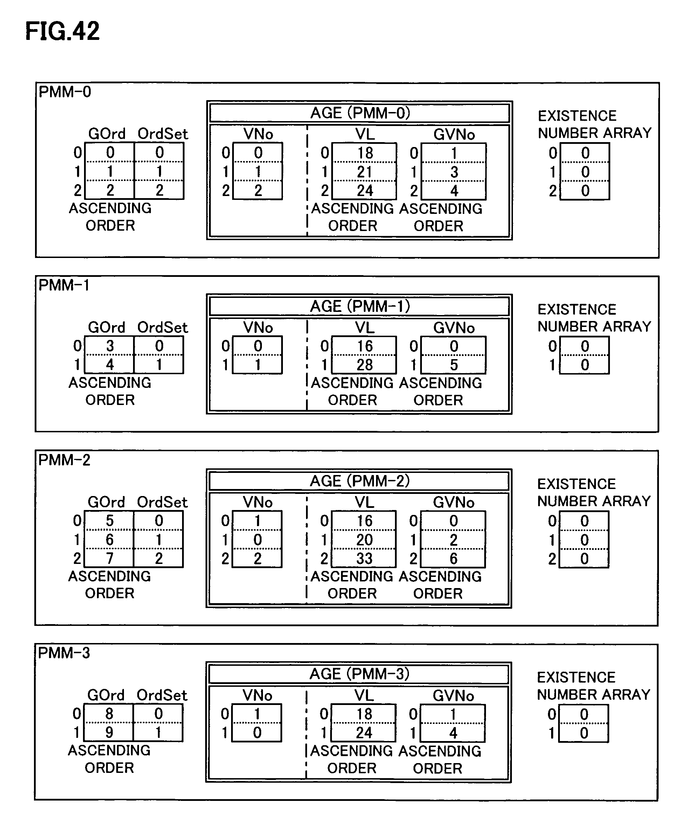

Next, a sort processing will be described. Also here, the processing is started from the state in which the compile processing is ended. As shown in Fig. 41, each PMM creates an area of an existence number array with the same size as a value list VL relating to an item to be sorted (step 4101), and gives initial values "0" to respective values in the area (step 4102). Fig. 42 shows a state in which with respect to the item of "age" , an area with the same size as the value list VL is formed in each PMM, and an initial value "0" is given to each.

Next, each PMM executes the count-up processing to each of the existence number arrays (step 4103). In more detail, each PMM refers to the value of the ordered set array OrdSet, and specifies the value of the pointer array VNo of the item to be sorted (step 4111) . Next, each PMM counts up the value at a position indicated by the value of the pointer array VNo (step 4112). The processing as stated above is repeated to the end of the ordered set array OrdSet (see steps 4113 and 4114)

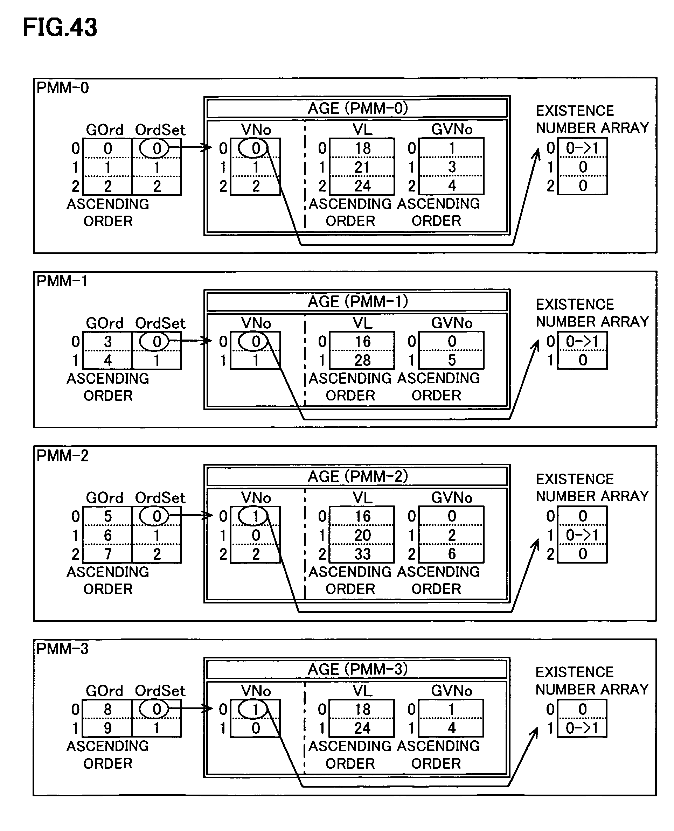

Fig. 43 is a view showing an example of count-up in each PMM. For example, in the PMM-0, the value of the pointer array VNo of the age at the position indicated by the element "0" of the ordered set array OrdSet is "0" . Accordingly, the value at the "0th" position of the existence number array, that is, at the head position is counted up from "0" to "1". It is understood that also in the other PMM, a similar processing is executed.

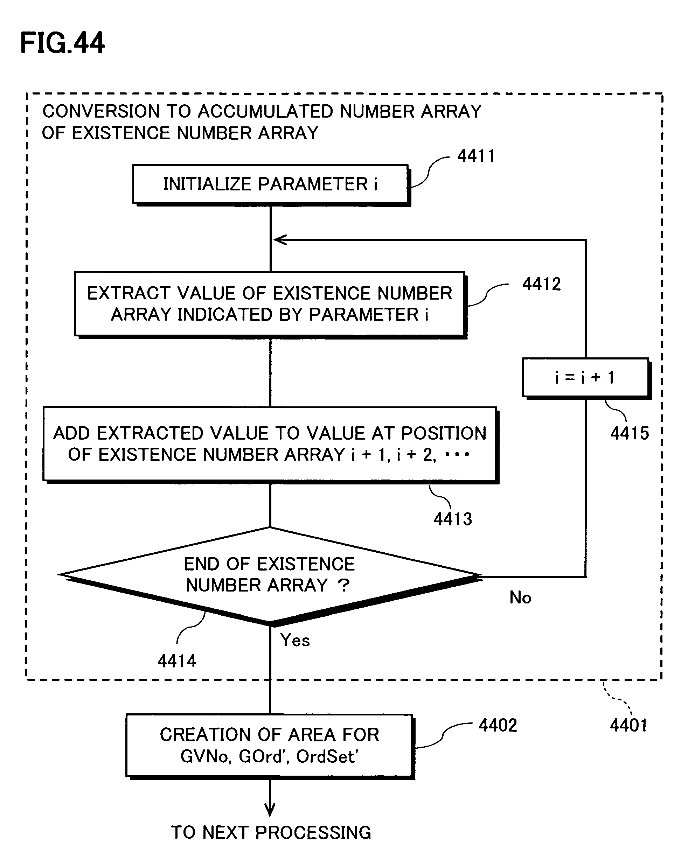

When the count-up processing is ended, as shown in Fig. 44, each PMM accumulates elements of the existence number array, and converts the existence number array into an accumulated number array (step 4401). In view of the existence number indicating the number of records indicating item values, the accumulated number as an element of the accumulated number array indicates the head position of the record indicating the item value at the position where the accumulated number is arranged. Specifically, each PMM initializes a parameter "i" indicating the position of the array (step 4411), extracts a value in the existence number array indicated by the parameter (step 4412), and adds the value extracted at step 4412 to the values of the existence array at the positions after the position indicated by the parameter "i" , that is, the positions of "i+1" , "i+2", ··· (step 4413). It is appropriate that the processing shown at steps 4412 and 4413 is repeated by the number of elements (item values) of the value list VL (see steps 4414 and 4415).

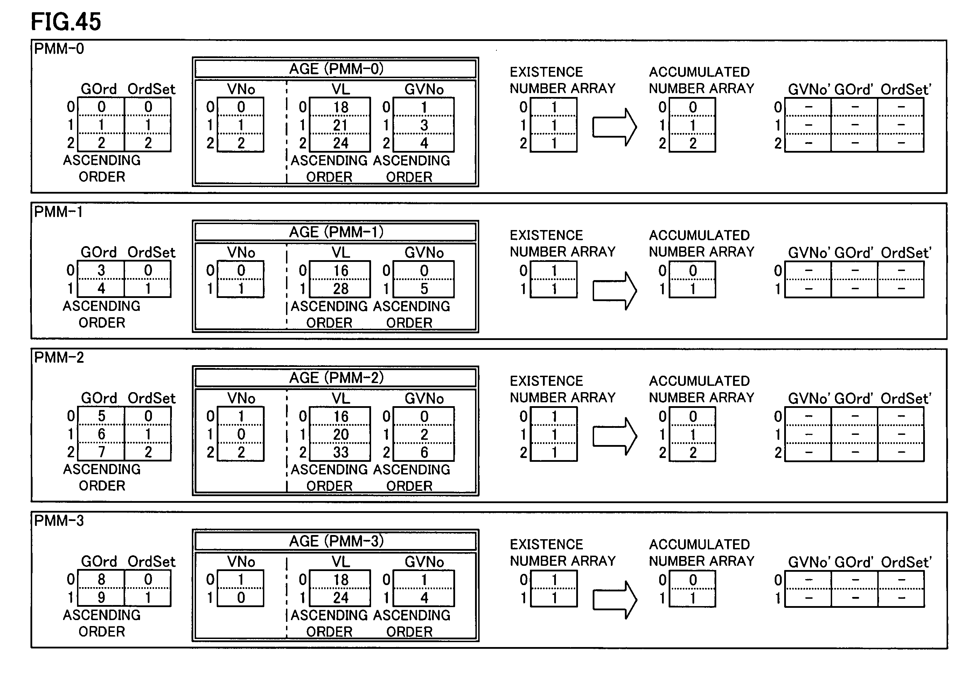

As stated above, for example, the accumulated number array as shown in Fig. 45 can be obtained. Further, in each PMM, areas for the arrays GVNo, GOrd' and OrdSet' for storing orders in the whole PMM later are also formed (step 4402) . The sizes of these arrays are respectively coincident with the size of the value list VL.

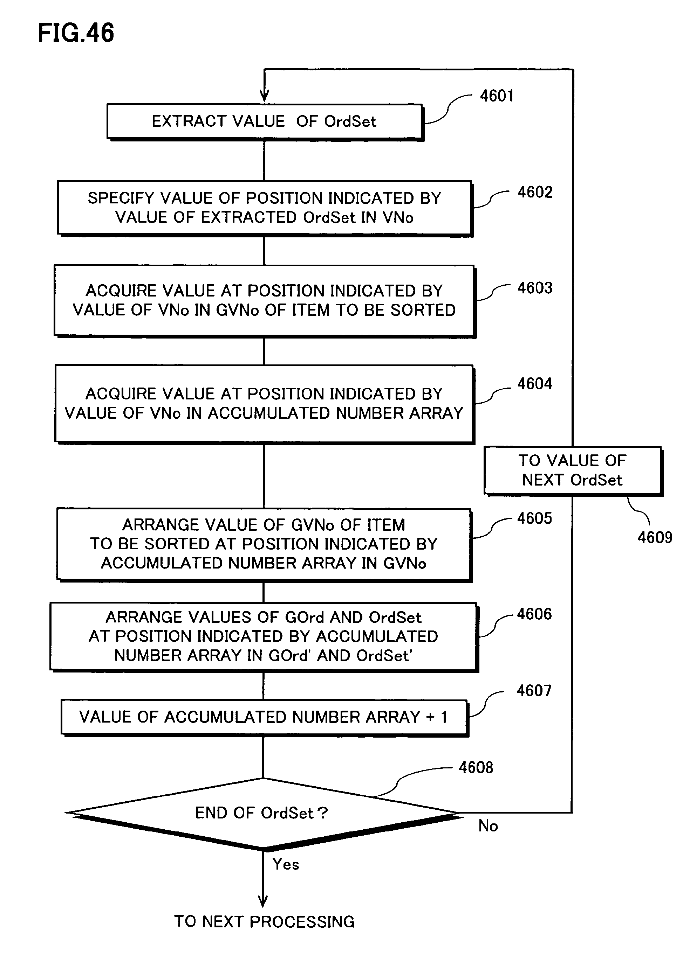

Next, a local sort processing in each PMM is executed. As shown in Fig. 46, each PMM extracts a value of the ordered set array OrdSet (step 4601), and next specifies a value (pointer value) at the position indicated by the value of the array OrdSet in the pointer array VNo (step 4602). Thereafter, each PMM acquires a value at the position indicated by the value of the pointer array VNo in the global value number array of the item to be sorted (step 4603). This value is used in an after-mentioned value storage processing. On the other hand, also in the accumulated number array, a value at a position indicated by the pointer array VNo is acquired (step 4604). This value is used to specify a position in the array in the after-mentioned value storage processing.

Next, the value storage processing is executed. Each PMM arranges the value of GVNo, which is acquired at step 4602 and relates to the item to be sorted, at the position indicated by the value of the accumulated number array acquired at step 4604 in the previously created array GVNo (step 4605). Besides, each PMM arranges values of the global ordered set array GOrd and the ordered set array OrdSet in the array GOrd' and OrdSet' at the position indicated by the value of the accumulated number array acquired at step 4604 (step 4606). Next, the value of the accumulated number array used for the processing is incremented (step 4607).

The processing of the steps 4601 to 4607 is sequentially executed with respect to all values in the array OrdSet (see steps 4608 and 4609).

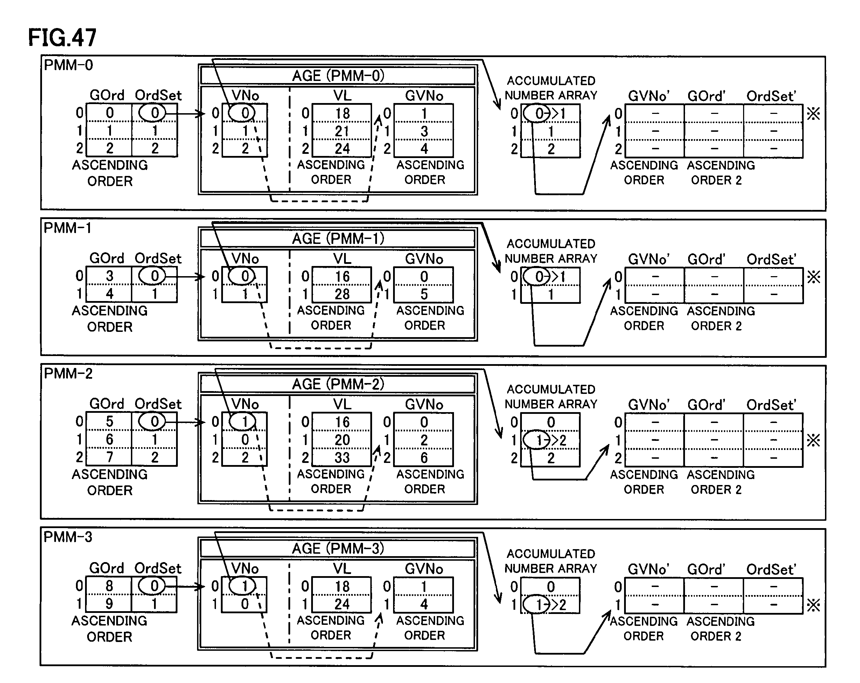

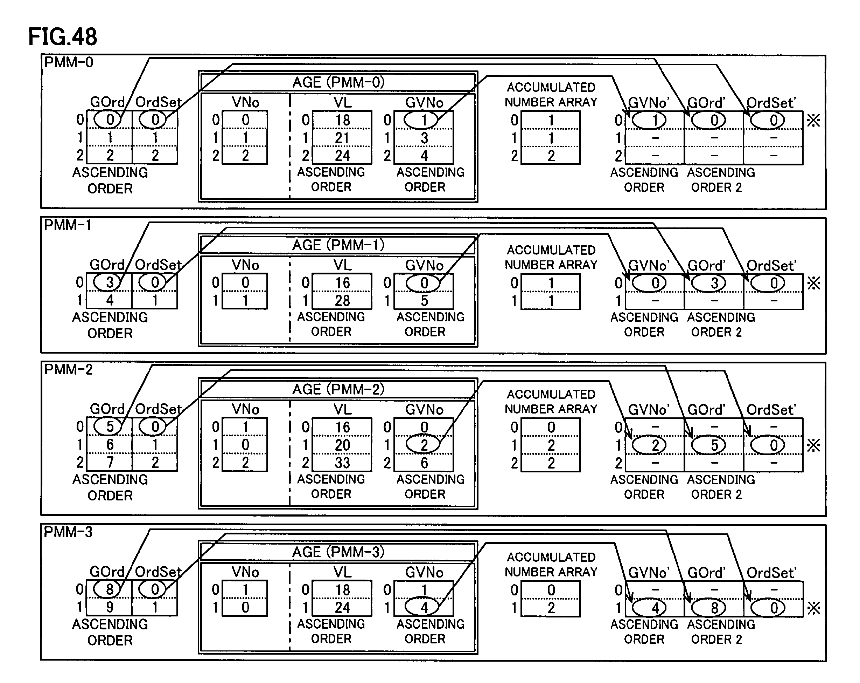

Fig. 47 and Fig. 48 are views showing an example of a state in which a local sort processing is executed in each PMM. For example, with respect to the PMM-0, in Fig. 47, it is understood that extraction of the value "0" of the array OrdSet (see step 4601), specification of the value "0" of the array VNo at the position indicated by the value "0" of the OrdSet (see step 4602), acquisition of the value "1" of the array GVNo at the position indicated by the value "0" of the array VNo (step 4603) , and acquisition of the value "0" of the accumulated number array at the position indicated by the value "0" of the array VNo (step 4603) are executed. Besides, it is understood that after the acquisition of the accumulated number array, the value of the accumulated number array is changed from "0" to "1" (see step 4607).

Besides, with respect to the PMM-0, in Fig. 48, it is understood that there is shown the arrangement (steps 4605 and 4606) of the value "1" of the array GVNo relating to the item "age", the value "0" of the array GOrd and the value "0" of the array OrdSet to the arrays GVNo, GOrd' and OrdSet' at the position indicated by the value of the accumulated number array acquired at step 4603. Also with respect to the other PMMs, in Figs. 47 and 48, it is understood that the processing shown at steps 4601 to 4605 is similarly executed.

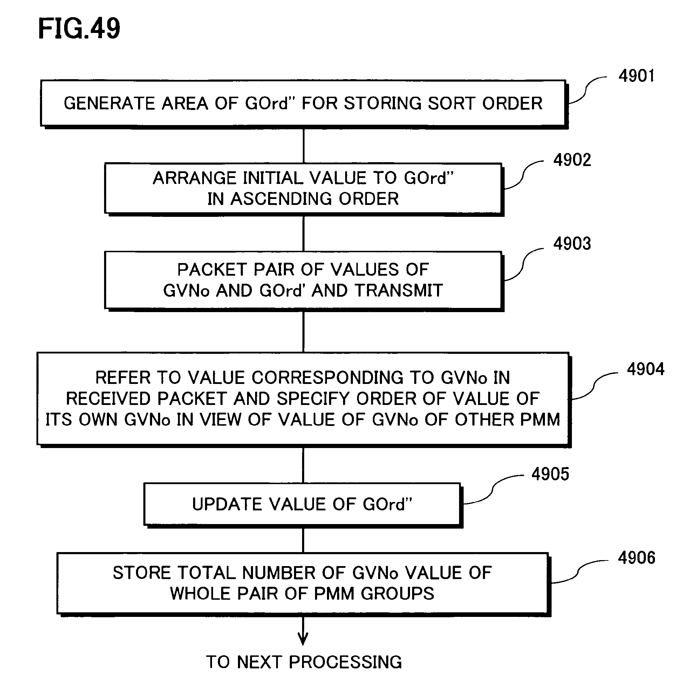

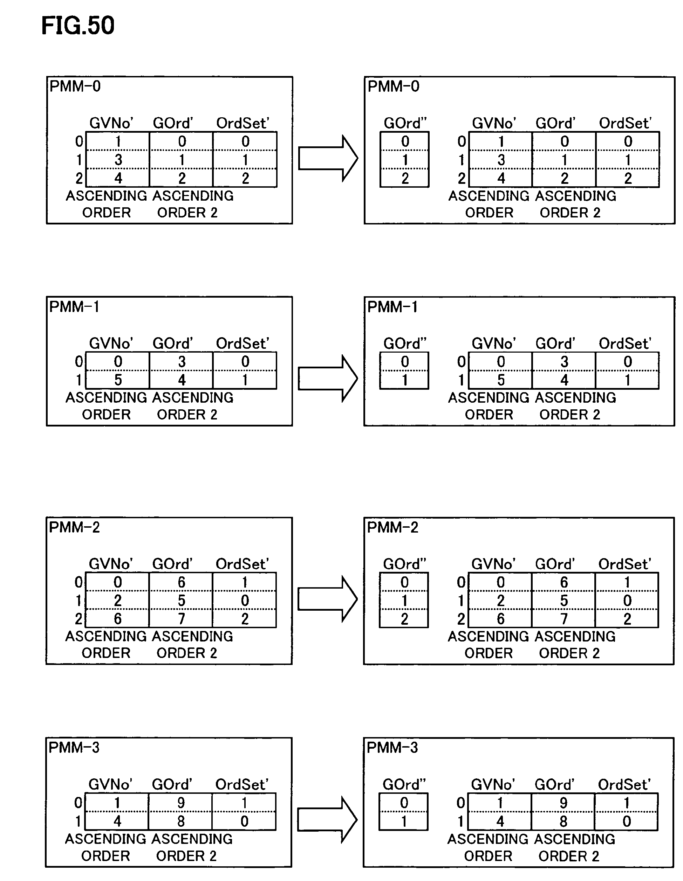

When the local sort processing as stated above in each PMM is ended, the sort processing of the whole PMM is executed by the packet communication between the PMMs. As shown in Fig. 49, an area of the array GOrd'' for storing the sort order in the whole PMM is created in each PMM (step 4901), and initial values are given in each array in the ascending order (step 4902). By these processings, as shown in Fig. 50, the array GOrd'' in which the initial values are arranged is formed in each PMM.

Next, a pair is formed of the adjacent PMMs, one PMM forming the pair uses one bus (for example, the first bus 14) connecting the paired PMMs, packets a pair of values of its own arrays GVNo and GOrd' and transmits it (step 4903). Similarly, the other PMM uses the other bus (for example, the second bus 16), packets a pair of its own arrays GVNo and GOrd' and transmits it (step 4903).

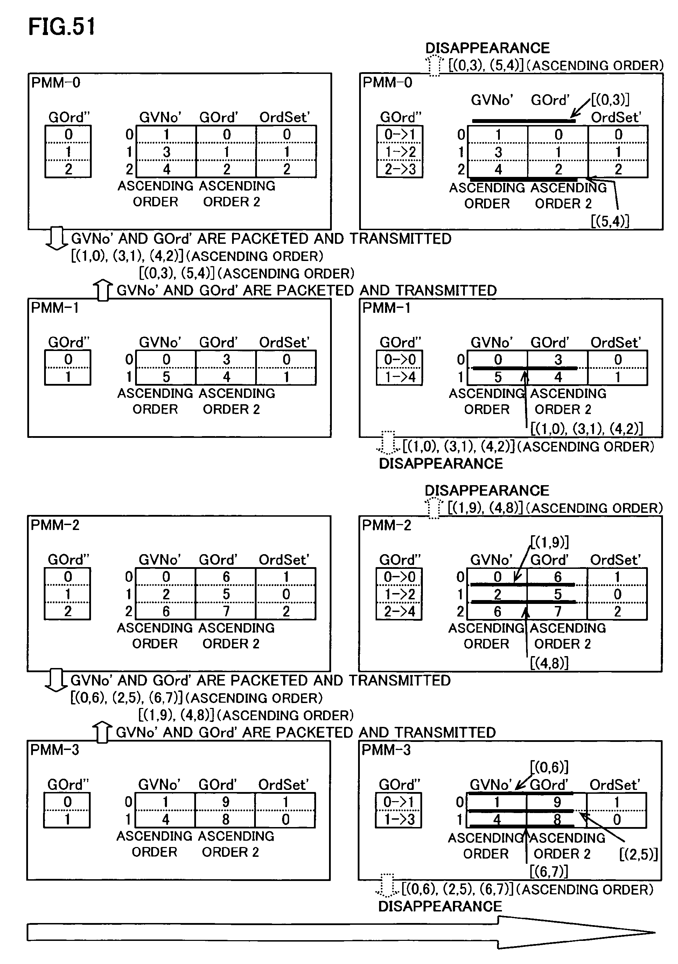

In an example of Fig. 51, a packet [(1,0), (3,1), (4,2)] is transmitted from the PMM-0 to the PMM-1, and a packet [(0,3), (5,4)] is transmitted from the PMM-1 to the PMM- 0 . Similarly, a packet [(0,6), (2,5), (6,7)] is transmitted from the PMM-2 to the PMM-3, and a packet [(1,9), (4,8)] is transmitted from the PMM-3 to the PMM-2.

The PMM having received the packet compares the value of the array GVNo of the other PMM of the pair in the received packet with the value of its own array GVNo, and specifies a relative value position (order) in view of the array GVNo of the other PMM (step 4904). In accordance with this position (order), the value of the array GOrd" is updated (step 4905). Incidentally, the PMM temporarily stores, with the update, the total number of values in the array GVNo of its own PMM and the other PMM of the pair (step 4906).

In the example of Fig. 51, the PMM-0 receives the packet [(0.3), (5,4)]. In this packet, "0" and "5" corresponding to the values of the array GVNo and values "1", "3" and "4" of its own array GVNo are compared. Here, because of "0 < 1 < 3 < 4 < 5", the values of the array GOrd'' are respectively updated to "1", "2" and "3". On the other hand, the PMM-1 receives the packet [(1,0), (3,1), (4,2)]. In this packet, " 1 " , "3" and "4" corresponding to the values of the array GVNo are compared with the values "0" and "5" of its own array GVNo. Also here, because of "0 < 1 < 3 < 4 <5", the values of the array GOrd " are respectively changed to "0" and "4". Also in the PMM-2 and the PMM-3, the value of the GOrd" is updated by a similar processing. Incidentally, it is sufficient if the PMM transmits the received packet at a next timing toward the direction in which the packet has been transmitted. Since there is no receiver, this packet is discarded.

Next, the previously formed pair of PMMs are made a PMM group, and a pair of adjacent PMM groups is formed. Incidentally, when the number of PMMs is a power of 2, the pair of PMM groups can be formed, however, when not so, with respect to a portion in which a pair of PMM groups can not be formed, it may be left as it is. For example, when the number of PMMs is three, a pair of a PMM group including PMM-0 and PMM-1 and PMM-2 may be formed.

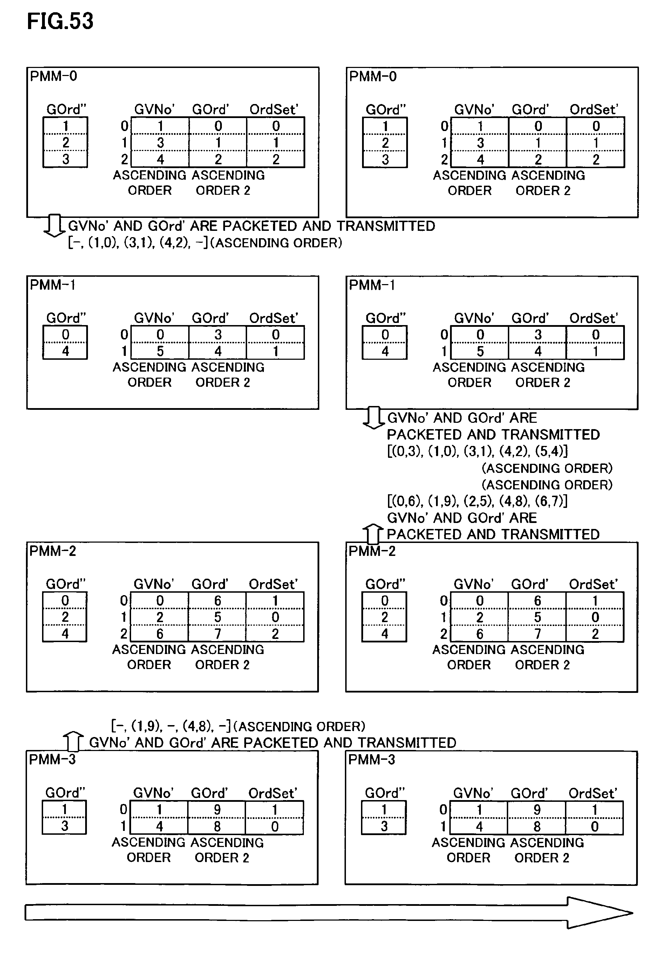

Thereafter, a packet is transmitted onto a bus (first bus) clockwise from an upstream side PMM of one PMM group in a clockwise direction, while a packet is transmitted onto a bus (second bus) counterclockwise from a downstream side PMM of the other PMM group in the clockwise direction. With respect to the example shown in Fig. 50 and Fig. 51, the packet is transmitted onto the first bus clockwise from the PMM-0, and the packet is transmitted onto the second bus counterclockwise from the PMM-3 (see Fig. 53).

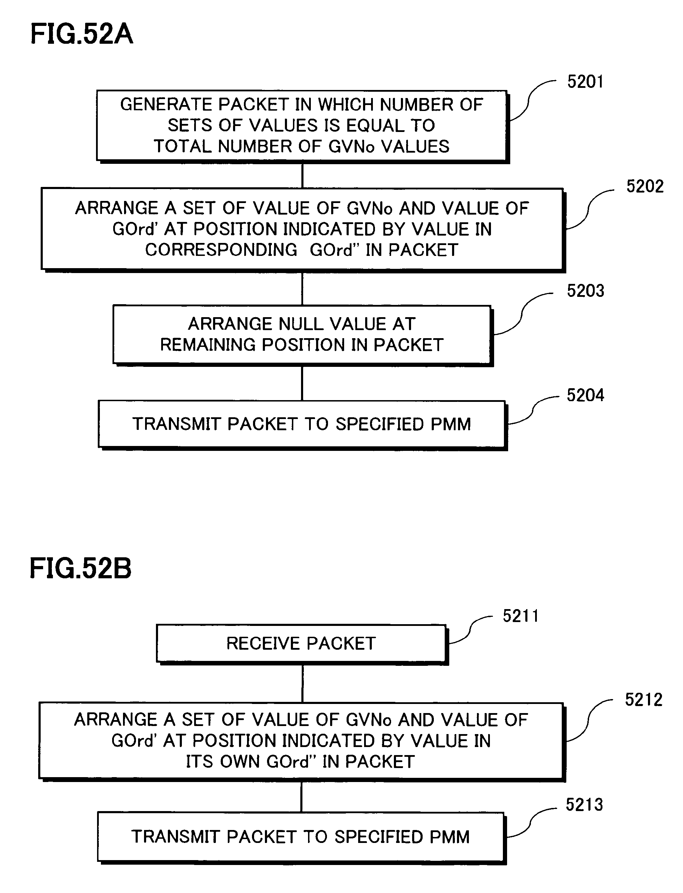

In more detail, as shown in Fig. 52A, the PMM to first transmit a packet generates such a packet that based on the total number of values of the array GVNo of the whole PMM group stored at step 4906, the number of pairs of values is coincident with the total number of the array GVNo, a pair of the value of the array GVNo of the PMM itself and the value of the array GOrd' are arranged at the positions indicated by the corresponding value in the array GOrd'', while a NULL value is arranged at the other position (steps 5201 to 5203). The created packet is transmitted to a next PMM in a specified direction (step 5204).

As shown in Fig. 53, for example, in the PMM-0, it is known that in the pair of PMM-0 and PMM-1, there are five values in the array GVNo. Accordingly, a packet [-, (1,0), (3,1), ( 4 , 2 ) , - ] (here, "-" denotes a NULL value) having a set of five values is transmitted clockwise to the PMM-1 through the first path. On the other hand, in the PMM-3, it is known that in the pair of PMM-2 and PMM-3, there are five values in the array GVNo. Accordingly, a packet [-, (1,9), -, (4,8), -] having five values is transmitted counterclockwise to the PMM-2 through the second bus.

As shown in Fig. 52B, as the destination of the packet, the PMM having received the packet refers to its own array GOrd'', and arranges a pair of the value of the corresponding array GVNo and the value of the GOrd' at a specified position of the NULL value in the packet, that is, the position indicated by the value of the array GOrd" (steps 5211 and 5212). Thereafter, the PMM transmits the packet to the next PMM along the direction in which the packet has flown (step 5213).

In Fig. 53, the PMM-1 having received the packet from the PMM-0 arranges the corresponding pairs (0,3) and (5,4) of values at the positions indicated by the elements "0" and "4" of its own array GOrd'' among positions where the NULL values are arranged. By this, a packet [(0,3), (1,0), (3,1), (4,2), (5,4)] is transmitted clockwise through the first bus. Besides, the PMM-2 having receiving the packet from the PMM-3 also similarly transmits a packet [( 0 , 6 ) , (1,9), ( 2 , 5 ) , ( 4 , 8 ) , (6,7)] counterclockwise through the second bus.

Next, a description will be given to a processing to be executed when a packet is received by a PMM constituting the other group of PMMs paired with one group of PMMs.

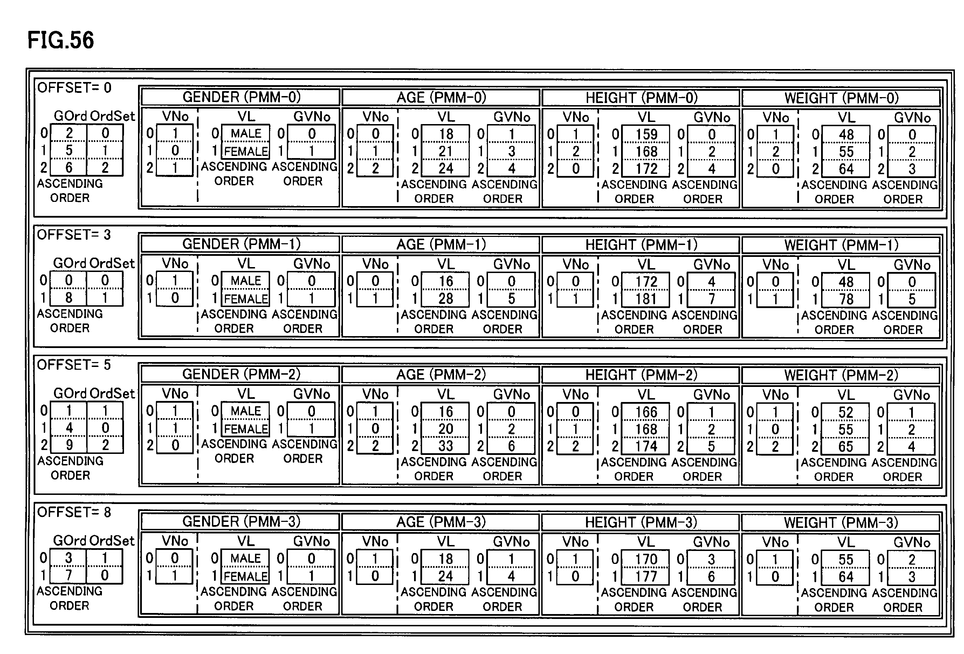

As shown in Fig. 55, when a PMM constituting the other group of PMMs receives a packet (step 5501), it compares a value corresponding to GVNo in the received packet with a value of its own GVNo, and specifies a relative value position (order) in view of the array GVNo of the other PMM (step 5502). In accordance with this position (order), the value of the array GOrd'' is updated (step 5503). Next, the PMM transmits the packet to the next adjacent PMM along the direction in which the packet has been transmitted (step 5504). Incidentally, at step 5502, in the case where the values of the GVNo are the same, reference is made to the value of the array GOrd' of the pair, and one whose value is small is arranged at an upper rank.

In the PMM having received the packet, the processing shown in Fig. 55 is sequentially repeated, a global ordered set array GOrd' ' indicating a sort order is completed. When the processing is ended, the created GOrd'' is read as GOrd, and the OrdSet' is read as OrdSet.

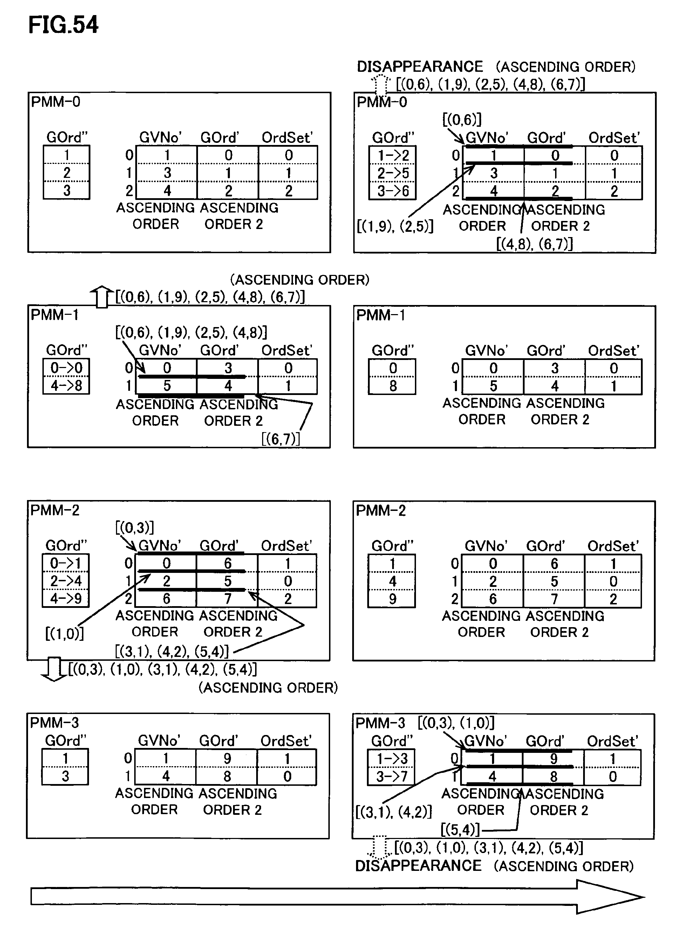

In the example of Fig. 54, the PMM-1 receives a packet [(0,6), (1,9), (2,5), (4,8), (6,7)] from the PMM-2. In this packet, when values corresponding to the array GVNo and values of its own array GVNo are compared with each other, because of "0 = 0 < 1 < 2 < 4 < 5", the values of the array GOrd'' are updated from "0" and "4" to "0" and "8", respectively. Incidentally, when the values of the arrays GVNo are the same, reference is made to the values of the respective corresponding GOrd'.

At a next timing, the PMM-0 receives the same packet [(0,6), (1,9), (2,5), (4,8), (6,7)] from the PMM-1. In this packet, when values corresponding to the array GVNo and values of its own array GVNo are compared with each other, "0 < 1 = 1 < 2 < 3 < 4 = 4 < 6" is obtained. Accordingly, the values of the array GOrd' ' are updated from "1", "2" and "3" to "2", "5" and "6", respectively. A similar processing is executed also in the PMM-2 and the PMM-3, and the values of the GOrd'' are updated in each of them.

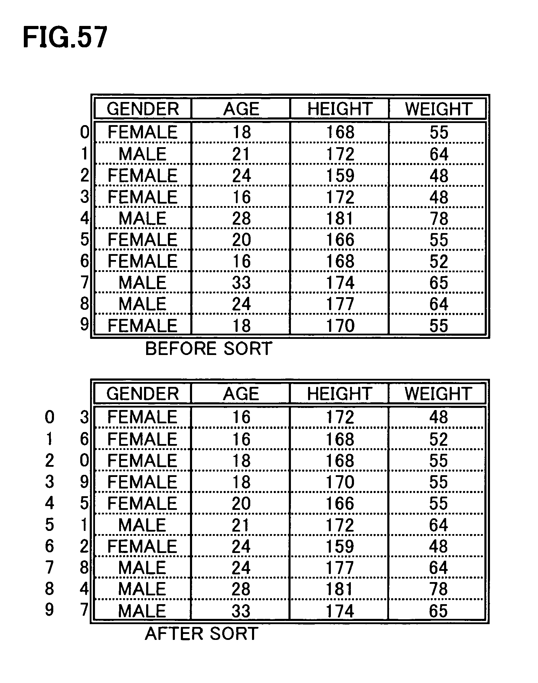

As described above, the created GOrd'' is read as GOrd, and OrdSet' is read as OrdSet, so that for example, the array as shown in Fig. 56 is acquired in each PMM. Here, a record is sequentially extracted in the order of the array GOrd, so that the sorted tabular data can be obtained (see Fig. 57).

### [System structure, meaning of the invention]

The information processing system of the invention is connected to, for example, a terminal device as a front end through a ring-shaped channel, and each PMM receives instructions from the terminal device, so that the processing of the foregoing compile, retrieval, cross tabulation and sort can be executed in the PMM. Besides, each PMM has only to transmit a packet by using a bus, and it is unnecessary to externally control the synchronization between the PMMs.

Besides, the control device may include, in addition to an accelerator chip including a hardware structure for a repeat operation such as the compilation or the retrieval, a general-purpose CPU. The general-purpose CPU interprets instructions transmitted through a channel from the terminal device, and can give a necessary instruction to the accelerator chip.

Further, it is desirable that a resister group for receiving various arrays necessary for operations, such as the ordered set array and the global ordered set array, is provided in the control device, especially in the accelerator chip. By this, when values necessary for a processing are once loaded from a memory to the register, in the foregoing processing operation relating to the compilation, retrieval, cross tabulation and sort, the control device may read the values from the register without accessing the memory or may write values in the register. By this, the number of times of memory access can be remarkably reduced (load before the operation processing, and writing of processing results), and the processing time can be remarkably shortened.

Next, the meaning of the array GOrd and the array GVNo introduced in the invention will be described. In the invention, the global ordered set array GOrd indicates a position (order) of each record of tabular data grasped by each PMM in global tabular data in which local tabular data grasped by the respective PMMs are collected. That is, in the invention, position information of a record is divided into a global component and a local component by the global ordered set array GOrd and the ordered set array OrdSet , and by this, it becomes possible to deal with the global tabular data, and it becomes also possible for each PMM to singly execute a processing.

In this embodiment, although the PMM is constructed to hold the information block of each item, also in the case where the PMM holds the tabular data as it is, the GOrd functions similarly as described later.

For example, in this embodiment, in the state where the compilation is ended (for example, see Fig. 17), the item values of each item are extracted in the order of values of the global ordered set array GOrd, so that a view of the whole tabular data can be created. Also in the state where the retrieval is ended (see, for example, Fig. 26) and the state where the sort is ended (see, for example, Fig. 56), the same applies.

In more detail, for example, in Fig. 17 , when the control circuit 20 of the PMM-2 receives the value "5" indicating the order, the value "0" in the (local) ordered set array OrdSet relating to the value "5" in the global ordered set array GOrd is specified. Further, with respect to the item "age", the value "1" in the pointer array VNo is specified, and next, the item value "20" in the value list VL can be specified. Of course, also with respect to another item, an item value in the pointer array VNo, and an item value in the value list VL specified by the value in the array VNo are specified. By this, it becomes possible to extract a record corresponding to a value indicating an order.

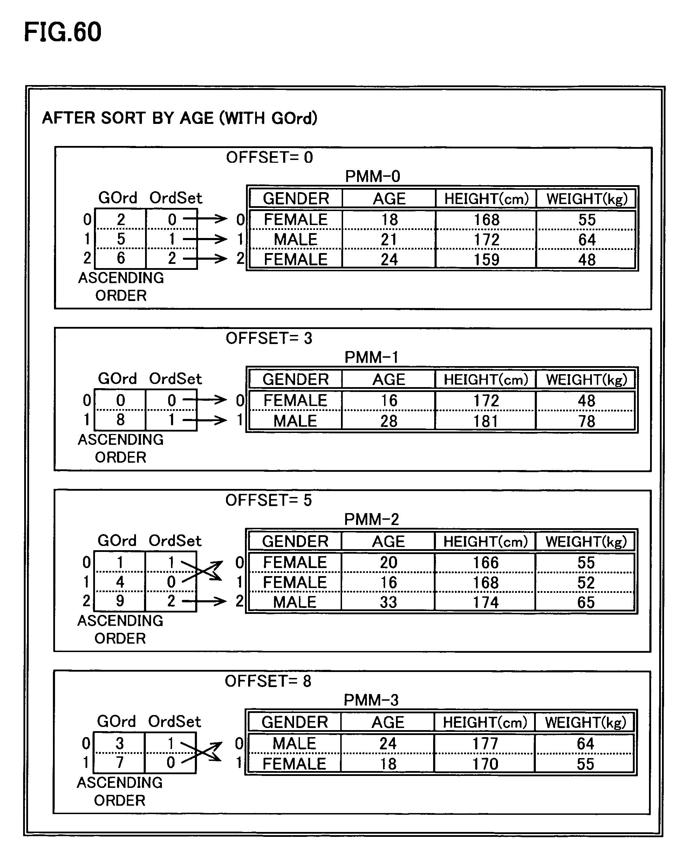

Besides, even in the structure not holding the information block, in response to the reception of a value indicating an order as described above, extraction of a corresponding record can be realized. This will be described later with reference to Fig. 60.

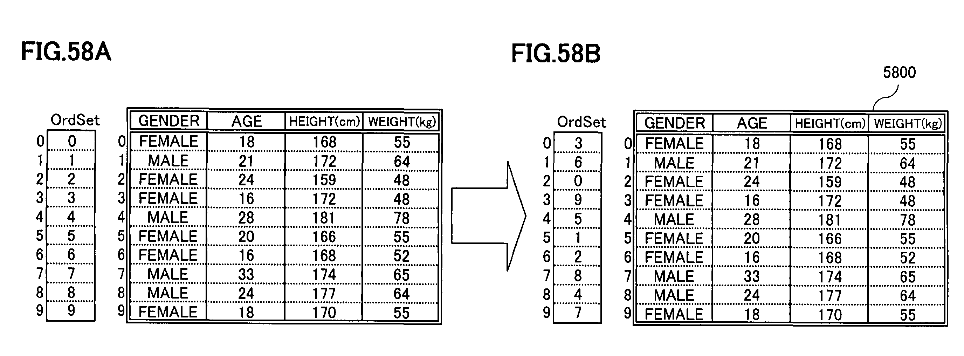

Next, the meaning of the array GOrd will be further described with reference to a structure not holding an information block. For example, consideration will be given to a case where as shown in Fig. 58A, tabular data is realized not by sorting values (item values) themselves, but by sorting values of an ordered set array as address information to specify items to rearrange the values in the array. The ordered set array OrdSet in Fig. 58B shows the order of records after the sort.

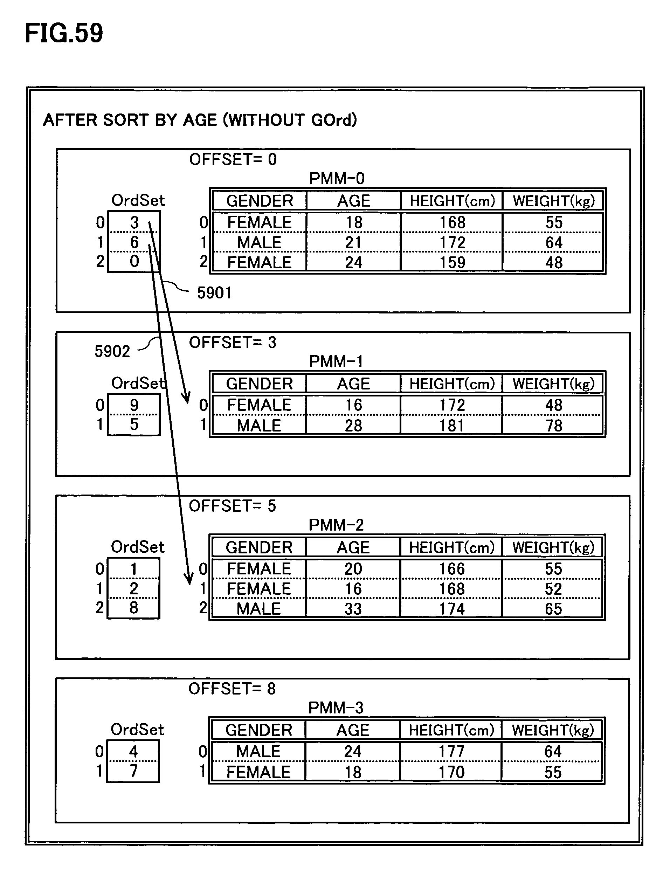

Next, it will be considered that the ordered set array OrdSet and the main body of the tabular data (see reference character 5800 of Fig. 58B) are assigned to and held by plural PMMs. Fig. 59 shows an example in which the ordered set array OrdSet is divided, the tabular data main body is divided, and pairs of the divided arrays OrdSet and the divided tabular data main bodies are assigned to the PMMs. In this case, there is also a case where a value in a PMM array OrdSet indicates a record which another PMM holds (see, for example, arrows 5901 and 5902). Accordingly, a processing which can be singly executed in each PMM does not substantially exist. Besides, in the example of Fig. 59 , in the case where the item "gender" is narrowed (retrieved) to the item value of "female", it is impossible to form clear standards concerning how to assign an array containing values indicating the narrowed records. That is, the retrieval in the foregoing state becomes substantially impossible.

On the other hand, as shown in Fig. 60, the order of local sorted records in the subset of the tabular data held by each PMM is grasped by the ordered set array OrdSet , and the order of each of the sorted records in the whole is grasped by the global ordered set array GOrd. Since the (local) ordered set array OrdSet indicates the record of the subset of its own grasped tabular data, the processing by the single PMM becomes possible.

The extraction of records in response to the reception of the value indicating the order in the example shown in Fig. 60 will be described below. For example, when the control circuit of the PMM-0 receives the value "5" indicating the order, the value "1" in the (local) ordered set array OrdSet relating to the value "5" in the global ordered set array GOrd is specified. By this, the record of "gender: male", "age: 21", "height: 172" and "weight: 64" in the PMM-0 is extracted.

Further, especially, it should be noted here that since the local sort is reflected, a reversal of the order of the values can occur in the values of the (local) ordered set array OrdSet, however, the values of the global ordered set array GOrd have the ascending order. By this, high speed processing between the PMMs and processing in the PMM become possible. Of course, also after the retrieval processing and the cross tabulation processing, the values of the global ordered set array GOrd have the ascending order.

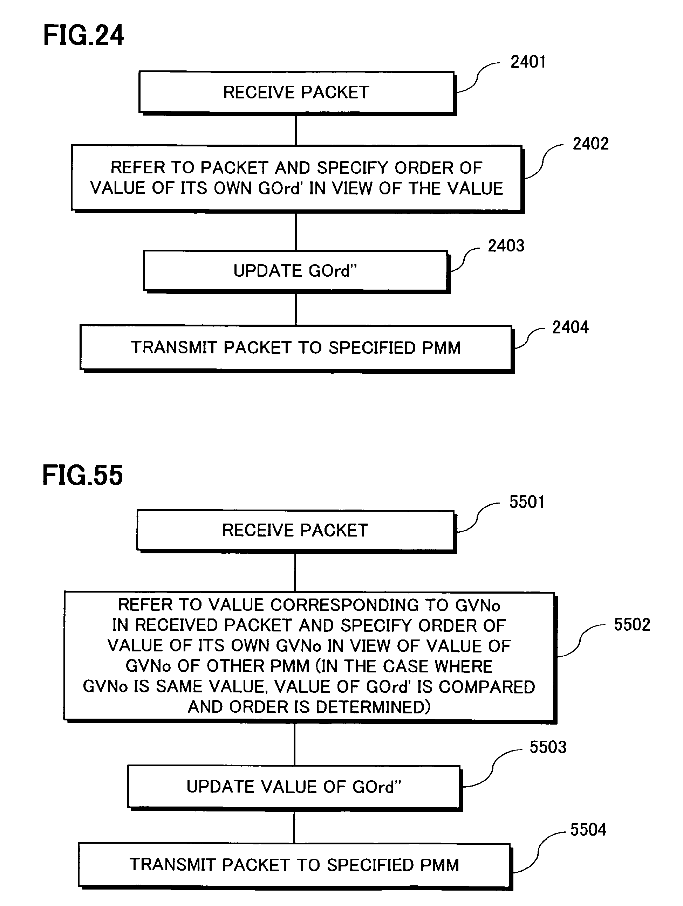

As stated above, that the array GOrd has the ascending order produces merits as stated below. For example, in the previously described retrieval processing, since the array GOrd (array GOrd' is used for the processing) has the ascending order, the comparison of values can be realized at high speed (see Fig. 23 to Fig. 25). Similarly, also with respect to the sort processing described before, since the array GOrd (array GOrd' is used for the processing) has the ascending order (in addition to this, since after-mentioned array GVNo also has the ascending order), the comparison processing of values can be realized at high speed (Fig. 52A to Fig. 54).

Besides, even in the case where the sorted record is extracted, and the sorted view is created, since the global ordered set array GOrd has the ascending order, each PMM has only to output data in sequence from the head record, and therefore, the processing can be speeded up.

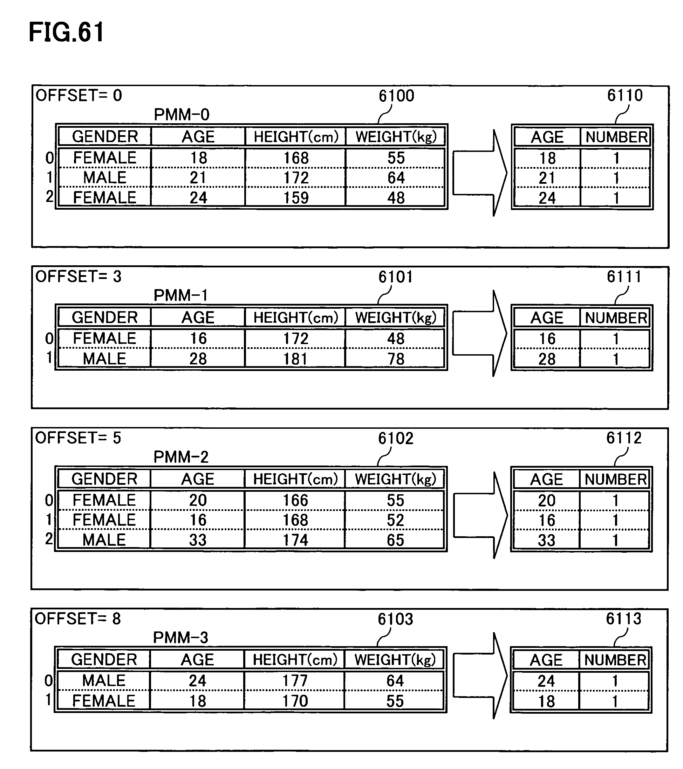

Next, the meaning of the global value number array GVNo will be described. The global value number array is especially useful at tabulation. For example, it is assumed that records of subsets of tabular data as shown in Fig. 61 are grasped in respective PMMs (see reference characters 6100 to 6103). In the example as stated above, consideration is given to a case where tabulation results in the respective PMMs are integrated to acquire the tabulation result of the whole tabular data.

For example, in the case where the appearance number of the item "age" is tabulated, for each item value of the item "age" , an array to indicate the appearance number can be formed in each PMM (see reference characters 6110 to 6113). However, it is very difficult to integrate the appearance numbers of the respective item values in the respective PMMs as they are.

On the other hand, by introducing the global value number array, the position, in a definite order and in all the item values, of the item value held in each PMM can be specified. Accordingly, the value of the global value number array is made the key, and the whole tabulation, that is, the integration of appearance values can be realized.

Further, in the cross tabulation, by using the global value number array GVNo provided in the information block for each item, the tabulation result in each PMM is accumulated at the position in the logical coordinate array uniquely specified by a set of values of the global number array GVNo of the item relating to the cross tabulation, so that it becomes possible to smoothly realize the integration of the appearance value. Besides, it is also useful that the global value number array GVNo is used to specify and extract the item value, that is, the PMM receives information indicating the order of the value (item value) in the global tabular data, and extracts the item value corresponding to the order. For example, in Fig. 17, with respect to the item "age", in order to know the head, that is, the 0th item value, the PMM-1 having received the instruction indicating the order "0" of the value can specify the value "16" in the value list VL relevant to the value "0" in the global value number array GVNo. Of course, the PMM-2 having received the instruction may similarly operate.

Further, the global value number array GVNo also has the ascending order. This is because when the item value of the (local) value list grasped by each PMM has the ascending order, the order is held. Accordingly, in the sort processing, the comparison processing of values can be realized at high speed (see Fig. 52A to Fig. 54).

The invention is not limited to the above embodiment, and various modifications can be made within the scope of the invention recited in claims, and it is needless to say that those are also contained in the scope of the invention.

In the embodiment, the PMMs are connected like a ring by, on the one hand, the first bus (first transmission path) to transmit a packet clockwise and by, on the other hand, the second bus (second transmission path) to transmit a packet counterclockwise. By the structure as stated above, since the delay time of packet transmission can be made uniform, it is advantageous. However, limitation is not made to this, and another mode transmission path such as a bus type may be adopted.

Besides, in this embodiment, although the PMM including the memory, the interface and the control circuit is used, limitation is not made to this, and a personal computer, a server or the like may be used, instead of the PMM, as the information processing unit to which the local tabular data is assigned. Alternatively, a structure may be adopted in which a single personal computer or server holds plural information processing units. Also in these cases, the information processing unit receives the value indicating the order of a record, and can specify the record by referring to the global ordered set array GOrd. Besides, it is also possible to specify the item value by referring to the global value number array.

Besides, the transmission path between the information processing units may also adopt the so-called network type or bus type.

By adopting the structure in which plural information processing units are provided in a single personal computer, the invention can be used as follows. For example, three pieces of tabular data of Sapporo branch office, Tokyo branch office, and Fukuoka branch office are prepared, and the retrieval, tabulation, sort and the like are normally executed in units of respective branch offices. Further, global tabular data in which the three branch offices are integrated is considered, the tabular data of each branch office is regarded as the partial table of the whole table, and the retrieval, sort and tabulation relating to the global tabular data can be realized.

Of course, also in the case where plural personal computers are connected by a network, similarly, it is also possible to realize a processing relating to local tabular data assigned to the personal computers, and a processing relating to the global tabular data.

According to the invention, in the distributed memory type, the information processing apparatus capable of realizing a remarkably high speed parallel processing can be provided by integrating the processing and communication.

### Industrial Field of Application

The invention can be used particularly for a system to manage a large amount of data, for example, a database or a data warehouse. More specifically, it can be used for large-scale scientific calculation, basic business management such as order intake/order placement management or stock transaction, and office management.

## Claims

1. An information processing system comprising:
plural information processing units each holding a local information block to express tabular data expressed as an array of records including an item and item values belonging to the item; and
a packet transmission path to connect the plural information processing units,
wherein the local information block includes a value list in which the item values are stored in order of item value numbers corresponding to item values belonging to a specific item, and a pointer array in which pointer values to indicate the item value numbers are stored in order of numbers to indicate a unique local order corresponding to the records, and the information processing unit is **characterized in that**
each of the information processing units includes:
means for creating, based on the numbers to indicate the local order in the local information block, numbers to indicate a unique global order in all the plural information processing units;
means for transmitting the value list to another information processing unit through the packet transmission path;
means for receiving a value list from the another information processing unit through the packet transmission path; and
means for giving, by referring to an item value in the value list from the another information processing unit, a global order in all the plural information processing units to the item value in the value list in the local information block.

2. An information processing system comprising:
plural memory modules each having a memory, an interface, and a control device; and
a packet transmission path connecting interfaces of the adjacent memory modules,
wherein a memory of each of the memory modules holds an information block including a value list which is for expressing tabular data expressed as an array of records each including an item and an item value belonging to the item and in which item values are stored in order of item value numbers corresponding to the item values belonging to a specific item, and a pointer array in which pointer values to indicate the item value numbers are stored in a unique order of an ordered set array, and a global information block is formed of an aggregate of the information blocks held in the respective memories, and the information processing system is
**characterized in that**
the control device of each of the memory modules includes: offset value storage means for holding an offset value to indicate that its own grasped information block, as a subset of the global information block, occupies which position in the pointer array;
global ordered set array creation means for creating, based on the offset value, a global ordered set array in the global information block;
packet transmission means for packeting its own value list of an item and transmitting it by using the transmission path between the adjacent memory modules;
packet reception means for receiving a packeted value list of another memory module by using the transmission path in parallel to packet transmission by the packet transmission means; and
order judgment means for determining an order, in the global information block, of the item value in its own value list of the item by referring to the received respective value list and for storing the order, in the global information block, of the item value into a global value number array relating to the item.

3. The information processing system according to claim 2, **characterized in that** the order judgment means is constructed to calculate the order in the global information block by adding a total sum of differences between the judged respective relative orders and the original order to the original order.

4. The information processing system according to claim 2 or 3, **characterized in that** the order judgment means compares the transmitted packet and the received packet and deletes a duplicate value.

5. The information processing system according to any one of claims 2 to 4, **characterized in that** the control device of each of the memory modules includes:
flag array setup means for creating, with respect to an item to be retrieved, a flag array with a same size as the value list of the item and for giving a specific value to an inside of the flag array corresponding to an item value coincident with a retrieval condition;
retrieval condition judgment means for judging whether a record corresponding to a value in the ordered set array is coincident with the retrieval condition by specifying, with respect to the item to be retrieved, a value in the pointer array corresponding to a position indicated by the ordered set array and then by specifying a value in the flag array corresponding to a position indicated by the value in the pointer array; and
local retrieval means for storing a value of an ordered set coincident with the retrieval condition and a value of a corresponding global ordered set into a second ordered set array and a second global ordered set array,
wherein the packet transmission means uses the transmission path, packets the second global ordered set array and transmits it, the packet reception means uses the transmission path and receives a packeted second global ordered set array of another memory module,
there is further included second order judgment means for determining an order, in the global information block, of a value in its own global ordered set array by referring to the received respective second global ordered set array and for storing the order in the global information block into a third global ordered set array, and
an order of a record coincident with the retrieval condition is decided by a value of the third global ordered set array.

6. The information processing system according to any one of claims 2 to 5, **characterized in that** the control device of each of the memory modules includes
count-up means for creating, with respect to items to be tabulated, a logical coordinate array with a size obtained by multiplying sizes of value lists of the items and for acquiring the number of records for each set of item values of each item by counting up values of the logical coordinate array indicated by values in the ordered set array and corresponding to the sets of the values in the pointer arrays of the items to be tabulated,
wherein the packet transmission means uses the transmission path, and packets and transmits the logical coordinate array in which count-up has been performed by the count-up means, the number of records for each set of item values of each global item is stored in the logical coordinate array by sequentially executing, in each of the memory modules, the count-up of the same logical coordinate array and the transmission using the transmission path, and
in each of the memory modules, the packet reception means and the packet transmission means sequentially execute reception and storage of the logical coordinate array in which the count-up has been ended, and the transmission using the transmission path.

7. The information processing system according to claim 6, **characterized in that** the count-up means creates, with respect to items to be tabulated, a multi-dimensional count-up array with a size obtained by multiplying sizes of value lists of the items, acquires the number of records for each set of item values of each item by counting up values in the count-up array indicated by values in the ordered set array and corresponding to the set of values in the pointer arrays of the items to be tabulated, and arranges, in the logical coordinate array in which mapping to position in the count-up array is made, a value in the count-up array in accordance with the mapping.

8. The information processing system according to any one of claims 2 to 7, **characterized in that** the control device of each of the memory modules includes:
existence number array creation means for creating, with respect to an item to be sorted, an existence number array with a same size as a value list of the item and for arranging the number of values, to specify respective item values in the value list, of the ordered set array;
accumulated number array creation means for accumulating values in the existence number array, calculating an accumulated number to indicate a head position of a record having a corresponding item value at a time when the sort is performed in the memory module, and arranging the accumulated number in an accumulated number array; and
local sort means for creating a second global value number array, a fourth global ordered set array and a third ordered set array, arranging a global value number corresponding to the item value at a position indicated by the accumulated number in the second global value number array based on the accumulated number in the accumulated number array corresponding to an item value indicated by a value of the ordered set array, and arranging a value of the ordered set array and a value of the corresponding global ordered set array at a position indicated by the accumulated number in the third ordered set array and the fourth global ordered set array,
wherein the packet transmission means uses the transmission path, and packets and transmits at least the second global value number array, and the packet reception means uses the transmission path in parallel and receives a packeted second global value array of another memory module,
there is further included third order judgment means for storing an order, in the global information block, of a value in its own second global value number array into the fifth global ordered set array, and
an order of the sorted record is decided by the value of the fifth global ordered set array.

9. The information processing system according to claim 8, **characterized in that** the packet transmission means packets and transmits the second global value number array and the fourth global ordered set array by pairing a value of the second global value number array and a value of the fourth global ordered set array, the packet reception means receives the packeted second global value number array and fourth global ordered set array of another memory module, and
the third order judgment means judges an order by comparing, when a value of its own second global value number array and a value of the second global number array of another memory module are equal, values of the fourth global ordered set arrays forming a pair of the respective values.

10. The information processing system according to any one of claims 2 to 9, **characterized in that** the control device of the memory module includes a resister group for use as the array, and an operation using the array is executed without accessing a memory.

11. An information processing method in an information processing system including plural information processing units each holding a local information block to express tabular data expressed as an array of records including an item and item values belonging to the item, and
a packet transmission path to connect the plural information processing units,
wherein the local information block includes a value list in which the item values are stored in order of item value numbers corresponding to item values belonging to a specific item, and a pointer array in which pointer values to indicate the item value numbers are stored in order of numbers to indicate a unique local order corresponding to the records, and
in each of the information processing units, the information processing method is **characterized by** comprising:
a step of creating, based on the numbers to indicate the local order in the local information block, numbers to indicate a unique global order in all the plural information processing units;
a step at which each of the information processing unit transmits the value list to another information processing unit through the packet transmission path;
a step at which each of the information processing unit receives a value list from the another information processing unit through the packet transmission path; and
a step at which each of the information processing units gives, by referring to an item value in the value list from the another information processing unit, a global order in all the plural information processing units to the item value in the value list in the local information block.

12. An information processing method in an information processing system including plural memory modules each having a memory, an interface, and a control device, and
a packet transmission path connecting interfaces of the adjacent memory modules,
wherein a memory of each of the memory modules holds an information block including a value list which is for expressing tabular data expressed as an array of records each including an item and an item value belonging to the item and in which item values are stored in order of item value numbers corresponding to the item values belonging to a specific item, and a pointer array in which pointer values to indicate the item value numbers are stored in a unique order of an ordered set array, and a global information block is formed of an aggregate of the information blocks held in the respective memories, and
the information processing method is **characterized by** comprising:
in each of the memory module, an offset value storage step of holding an offset value to indicate that its own grasped information block, as a subset of the global information block, occupies which position in the pointer array;
a global ordered set array creation step of creating a global ordered set array in the global information block based on the offset value;
a packet transmission step of packeting its own value list of an item and transmitting it by using the transmission path between the adjacent memory modules;
a packet reception step of receiving a packeted value list of another memory module by using the transmission path in parallel to the packet transmission; and
an order judgment step of referring to the received respective value list and storing an order, in the global information block of the item value, of the item value in its own value list of the item into a global value number array relating to the item.

13. The information processing method according to claim 12, **characterized in that** the order judgment step includes a step of calculating the order in the global information block by adding a total sum of differences between the judged respective relative orders and the original order to the original order.

14. The information processing method according to claim 12 or 13, **characterized in that** at the order judgment step, the transmitted packet is compared with the received packet and a duplicate value is deleted.

15. The information processing method according to any one of claims 12 to 14, **characterized by** comprising: in each of the memory modules,
a flag array setup step of creating a flag array with a same size as the value list of the item and giving a specific value to an inside of the flag array corresponding to an item value coincident with a retrieval condition;
a retrieval condition judgment step of judging whether a record corresponding to a value in the ordered set array is coincident with the retrieval condition by specifying, with respect to an item to be retrieved, a value in the pointer array corresponding to a position indicated by the ordered set array and then by specifying a value in the flag array corresponding to a position indicated by the value in the pointer array;
a local retrieval step of storing a value of an ordered set coincident with the retrieval condition and a value of a corresponding global ordered set into a second ordered set array and a second global ordered set array;
a second packet transmission step of packeting the second global ordered set array and transmitting it by using the transmission path;
a second packet reception step of receiving a packeted second global ordered set array of another memory module by using the transmission path in parallel to the packet transmission; and
a second order judgment step of determining an order, in the global information block, of a value in its own global ordered set array by referring to the received respective second global ordered set array and storing the order in the global information block into a third global ordered set array,
wherein an order of a record coincident with the retrieval condition is decided by a value of the third global ordered set array.

16. The information processing method according to any one of claims 12 to 15, **characterized by** comprising: in each of the memory modules,
a count-up step of creating, with respect to items to be tabulated, a logical coordinate array with a size obtained by multiplying sizes of value lists of the items, and acquiring the number of records for each set of item values of each item by counting up values of the logical coordinate array indicated by values in the ordered set array and corresponding to sets of values in the pointer arrays of the items to be tabulated; and
a third packet transmission step of packeting and transmitting, by using the transmission path, the logical coordinate array in which the count-up has been performed,
wherein the number of records for each set of item values of each global item is stored in the logical coordinate array by sequentially executing, in each of the memory modules, the count-up step to the same logical coordinate array and the transmission step using the one transmission path, and
there are further included:
a third packet reception step of, in each of the memory modules, receiving and storing the logical coordinate array in which the count-up has been ended; and
a fourth packet transmission step of transmitting the received logical coordinate array by using the transmission path.

17. The information processing method according to claim 16, **characterized in that** in the count-up step,
with respect to items to be tabulated, a multi-dimensional count-up array with a size obtained by multiplying sizes of value lists of the items is created, the number of records for each set of item values of each item is acquired by counting up values in the count-up array indicated by values in the ordered set array and corresponding to the set of values in the pointer arrays of the items to be tabulated, and in the logical coordinate array in which mapping to position in the count-up array is made, a value in the count-up array is arranged in accordance with the mapping.

18. The information processing method according to any one of claims 12 to 17, **characterized by** comprising: in each of the memory modules,
an existence number array creation step of creating, with respect to an item to be sorted, an existence number array with a same size as a value list of the item, and arranging the number of values, to specify respective item values in the value list, of the ordered set array;
an accumulated number array creation step of accumulating values in the existence number array, calculating an accumulated number to indicate a head position of a record having a corresponding item value at a time when the sort is performed in the memory module, and arranging the accumulated number in an accumulated number array;
a local sort step of creating a second global value number array, a fourth global ordered set array and a third ordered set array, arranging a global value number corresponding to the item value at a position indicated by the accumulated number in the second global value number array based on the accumulated number in the accumulated number array corresponding to an item value indicated by a value of the ordered set array, and arranging a value of the ordered set array and a value of the corresponding global ordered set array at a position indicated by the accumulated number in the third ordered set array and the fourth global ordered set array;
a fifth packet transmission step of packeting and transmitting at least the second global value number array by using the transmission path;
a fourth packet reception step of receiving a packeted second global value array of another memory module by using the transmission path in parallel to packet transmission; and
a third order judgment step of storing an order, in the global information block, of a value in its own second global value number array into the fifth global ordered set array,
wherein an order of the sorted record is decided by the value of the fifth global ordered set array.

19. The information processing method according to claim 18, **characterized in that**
at the fifth packet transmission step, a value of the second global value number array and a value of the fourth global ordered set array are paired, and the second global value number array and the fourth global ordered set array are packeted and transmitted,
at the fourth packet reception step, the packeted second global value number array and fourth global ordered set array of another memory module are received, and
at the third order judgment step, an order is judged by comparing, when a value of its own second global value number array and a value of the second global number array of another memory module are equal, values of the fourth global ordered set arrays forming a pair of the respective values.

20. A program for an information processing system including plural information processing units each holding a local information block to express tabular data expressed as an array of records including an item and item values belonging to the item, and
a packet transmission path to connect the plural information processing units,
wherein the local information block includes a value list in which the item values are stored in order of item value numbers corresponding to item values belonging to a specific item, and a pointer array in which pointer values to indicate the item value numbers are stored in order of numbers to indicate a unique local order corresponding to the records, and
the program causes each of the information processing units to realize:
a function of creating, based on the numbers to indicate the local order in the local information block, numbers to indicate a unique global order in all the plural information processing units;
a function of transmitting the value list to another information processing unit through the packet transmission path;
a function of receiving a value list from the another information processing unit through the packet transmission path; and
a function of giving, by referring to an item value in the value list from the another information processing unit, a global order in all the plural information processing units to the item value in the value list in the local information block.

21. An information processing system comprising:
plural information processing units each including a memory and a control device,
wherein the memory of each of the information processing units holds tabular data expressed as an array of records each including an item and an item value belonging to the item,
global tabular data is formed of an aggregate of tabular data held by respective memory modules, and the information processing system is **characterized in that**
each of the information processing units includes:
a global ordered set array containing values indicating orders of the respective records in the global tabular data; and
record extraction means for specifying a value in the global ordered set array in accordance with an instruction to specify an order received by the control device and for extracting the record indicated by the value.

22. The information processing system according to claim 21, **characterized in that** the information processing unit includes, in order to reflect a sort order in the information processing unit, another ordered set array in which values to specify the records are exchanged, and
in the global ordered set array, the value indicating the order is rearranged to indicate a sort order, in the global tabular data, of the record indicated by the value in the another ordered set array.

23. The information processing system according to claim 21, **characterized in that** the information processing unit rearranges the value indicating the order to indicate the sort order, in the global ordered set array, of the record sorted in the information processing unit.

24. The information processing system according to claim 21, **characterized in that** a memory of each of the information processing units holds
an information block including a value list which is for expressing tabular data expressed as an array of records each including an item and an item value belonging to the item and in which the item values are stored in order of item value numbers corresponding to item values belonging to a specific item, and a pointer array in which pointer values to indicate the item value numbers are stored in a unique order of an ordered set array, and
a global information block is formed of an aggregate of the information blocks held in the respective memories.

25. An information processing system comprising
plural information units each including a memory and a control device,
wherein a memory of each of the memory modules holds an information block including a value list which is for expressing tabular data expressed as an array of records each including an item and an item value belonging to the item and in which item values are stored in order of item value numbers corresponding to the item values belonging to a specific item, and a pointer array in which pointer values to indicate the item value numbers are stored in a unique order of an ordered set array, and a global information block is formed of an aggregate of the information blocks held in the respective memories, and the information processing system is
**characterized in that**
the information processing unit includes:
a global value number array to contain a value indicating an order of an item value in a global information block; and
item value extraction means for specifying a value in the global value number array in accordance with an instruction to specify an order received by the control device and for extracting an item value in the value list indicated by the value.
